(19) **Europäisches Patentamt / European Patent Office / Office européen des brevets**

(11) **EP 1 402 503 B1**

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(21) Anmeldenummer: **02747238.0**

(22) Anmeldetag: **25.06.2002**

(51) Int Cl.:
***G09B 23/32*** *(2006.01)*

(86) Internationale Anmeldenummer:
**PCT/DE2002/002337**

(87) Internationale Veröffentlichungsnummer:
**WO 2003/001483 (03.01.2003 Gazette 2003/01)**

(54) **PROGRAMMIERBARER GELENKSIMULATOR MIT KRAFT- UND BEWEGUNGSFEEDBACK**

PROGRAMMABLE JOINT SIMULATOR WITH FORCE AND MOTION FEEDBACK

SIMULATEUR D'ARTICULATION PROGRAMMABLE AVEC RETOUR DE FORCE ET DE MOUVEMENT

(84) Benannte Vertragsstaaten:
**AT BE CH CY DE DK ES FI FR GB GR IE IT LI LU MC NL PT SE TR**

(30) Priorität: **25.06.2001 DE 10130485**

(43) Veröffentlichungstag der Anmeldung:
**31.03.2004 Patentblatt 2004/14**

(73) Patentinhaber:
• **Riener, Robert**
**85591 Vaterstetten (DE)**
• **Burgkart, Rainer**
**80469 München (DE)**

(72) Erfinder:
• **Riener, Robert**
**85591 Vaterstetten (DE)**
• **Burgkart, Rainer**
**80469 München (DE)**

(74) Vertreter: **Müller, Thomas**
**Patentanwalt**
**Müller & Schubert**
**Innere Wiener Strasse 13**
**81667 München (DE)**

(56) Entgegenhaltungen:
| | |
|---|---|
| **DE-A- 19 856 913** | **US-A- 4 000 564** |
| **US-A- 4 605 373** | **US-A- 4 850 877** |
| **US-A- 5 441 413** | |

EP 1 402 503 B1

**Beschreibung**

Die Erfindung betrifft einen programmierbaren Gelenksimulator zum Nachbilden von biomechanischen Eigenschaften von menschlichen und tierischen Körperabschnitten mit Gelenken, d. h. einen interaktiven Anatomiesimulator zum Erlernen anatomischer Zusammenhänge und zum Trainieren medizinischer Handgriffe an einer Nachbildung anatomischer Gelenkverhältnisse. Das Training der klinischen Untersuchung und der Behandlung beliebiger Gelenkpathologien an Patienten kann heute noch nicht zufriedenstellend und effizient durchgeführt werden, da zum einen sehr viel Erfahrung notwendig ist, um die große Anzahl verschiedener Tests und Behandlungsverfahren sicher zu beherrschen. Andererseits ist die medizinische Ausbildung sehr theoretisch. Das Lernen oder Trainieren am Patienten ist nur beschränkt oder gar nicht möglich, da nicht beliebig viele Patienten mit den gewünschten Gelenkpathologien zu einem bestimmten Zeitpunkt verfügbar sind. Das Sammeln praktischer Erfahrung ist daher sehr aufwendig und zeitraubend und muß durch erfahrenes medizinisches Fachpersonal begleitet werden. Es bedarf folglich einiger Jahre Übung, bis der angehende Arzt die wesentlichen klinischen Untersuchungstests und Behandlungsverfahren beherrscht und vollwertig und selbständig ohne Betreuung einsetzen kann. Die medizinische Ausbildung und das Training am Patienten sind dementsprechend teuer. Das Training an anatomischen Präparaten (Leichname), in Tierversuchen oder an passiven mechanischen Modellen ist keine sinnvolle Alternative. Zur Lösung der vorstehend beschriebenen Aufgaben wird zunehmend die Technik der Virtuellen Realität (VR) angewendet.

Stand der Technik

a. Instrumentenbasierte Interaktion:

Die Besonderheit der meisten neuen in Entwicklung befindlichen Trainingssimulatoren für die Medizin, insbesondere für die Chirurgie, besteht darin, daß nicht nur visuelle, sondern- über entsprechende Kraftdisplays - auch haptische Informationen rückgemeldet werden und somit dem Bediener realistische Krafteindrücke vermittelt werden können. Das ist - zumindest für eine begrenzte Anzahl von Freiheitsgraden - technisch gut lösbar, da die Kräfte über chirurgische Instrumente, die der Operateur in den Händen hält und bedient, eingeleitet werden. Diese Technik wird als "instrumentenbasierte Haptik" oder als "toolbased haptic displays" bezeichnet.

Durch den Einsatz solcher instrumentenbasierter VR-Simulatoren kann das Erlernen von speziellen Operationstechniken, zum Beispiel in der minimalinvasiven Chirurgie, deutlich unterstützt werden. Viele Gruppen arbeiten derzeit an der Entwicklung solcher Simulationssysteme, zum Beispiel in der Laparoskopie (Kühnapfel et al., 1997; Baur et al., 1998; Tendick et al., 2000), der Kniearthroskopie (Ward et al., 1998; Müller und Bockholt, 1998), der Schulterarthroskopie (Smith et al., 1999), der endoskopischen Gynäkologie (Szekely et al., 1999) und der Hals-Nasen-Ohren-Medizin (Rudman et al., 1998). Auch komplizierte offene Operationen, zum Beispiel in der Chirurgie (Delp et al., 1997) oder der Augenchirurgie (Holland und Childers, 1995), lassen sich durch entsprechende VR-Simulationssysteme gut trainieren und planen. Andere VR-Umgebungen sind entwickelt worden, um das Setzen einer Injektion (Dang et al., 2001) oder das Setzen eines Katheters (Patent von Merril und Millman, 1996) mit Kraftfeedback zu üben. Allgemein formuliert wurde diese Idee für medizinische Anwendungen in einem Patent von Jacobus und Griffin (1995).

Der Nachteil der instrumentenbasierten Ansätze und Vorrichtungen ist, daß Körperabschnitte ausschließlich mit Instrumenten berührt werden können. Daher ist diese Technik nicht für Untersuchungen geeignet, bei denen der Arzt den betreffenden Körperabschnitt durch Berührung mit den Händen und Fingern erfassen und bewegen muß.

b. Interaktion durch virtuelle Palpation:

Schwieriger als die Darstellung instrumentenbasierter Interaktionen ist die Simulation von Greifbewegungen und Abtastvorgängen (Palpation), bei denen der Arzt direkt mit den Händen arbeitet. Dabei müssen auch taktile Informationen und die Fingerkinästhetik berücksichtigt werden, wobei unter Taktilität die Sinneswahrnehmung über den Tastsinn und unter Kinästhetik die Sinneswahrnehmung der Lage und Bewegung des Körpers oder Körperteils und der wirkenden Kräfte verstanden wird. Zur Vermittlung von kinästhetischen Eindrücken in den Fingern werden spezielle Datenhandschuhe (z. B. CyberGrasp™ von Virtual Technology Inc. oder Rutgers Master, siehe Langrana, 1994) verwendet. Es wurde eine Anwendung publiziert, nach der mit dem Rutgers-Master-Datenhandschuh das Berühren eines virtuellen Beines und Knies ermöglicht wird. (Langrana, 1994). Manche Gruppen benutzen das haptische Display PHANToM™ (SensAble Technologies Inc.), um damit Krafteindrücke in einem einzelnen Finger zu vermitteln (Patent von Rosenberg und Jackson, 1996). Howe et al. (1995) stellten ein taktiles Display vor, das zur Übertragung taktiler Informationen bei telechirurgischen Eingriffen eingesetzt werden kann. Andere Techniken wurden zur taktilen Darstellung von Textureindrücken entwickelt (Patente von Kramer, 1990; Kramer, 1997). Techniken, bei denen taktile Berührungseindrücke simuliert werden, sind noch nicht weit entwickelt.

Taktile und fingerkinästhetische Displays haben den Nachteil, daß sie technisch sehr aufwendig zu realisieren und daher teuer sind und nur eine eingeschränkte Wirklichkeitsnähe bieten.

c. Interaktive Visualisierung und Anatomieatlanten:

Besser ausgereift als die haptischen, insbesondere taktilen Displaytechniken sind rein graphische Systeme. Digitale Anatomieatlanten unterstützen das Studium der Anatomie. Sie ermöglichen eine interaktive Visualisierung statischer anatomischer Strukturen, bei denen sich der Bediener durch Maus- oder Joystickeingabe durch den Körper bewegen kann und so die Anatomie aus beliebigen Richtungen und in verschiedenen Schnitten erfahren kann (Human Interfaces AG & Fraunhofergesellschaft; Fa. 3B SCIENTIFIC). Einige wenige Arbeitsgruppen bemühen sich, die graphischen Displays mit haptischen Displays zu erweitern, so daß die anatomischen Strukturen mit den oben erwähnten Techniken (z. B. PHANToM-Gerät) auch berührt und unter Umständen verändert werden können (Langrana, 1994; Keeve und Kikinis, 1999; Kling-Petersen und Rydmark, 2000). Eine weitere Konzeptidee stammt von Pieper et al. (1991). Es wurde eine VR-Simulationsumgebung zum Studium der Biomechanik und der zugrundeliegenden Anatomie (funktionelle Anatomie) der unteren Extremität konzipiert. Der Bediener ist dabei in der Lage, virtuelle Muskeln, Sehnen, Bänder und andere Strukturen des Beines nicht nur zu berühren, sondern auch zu manipulieren und so ein Gefühl der resultierenden Gelenkeigenschaften durch Bewegen des Beines zu erlangen. Aber auch diese Konzeptidee beruht auf den vorstehend beschriebenen aufwendigen Techniken zur Erzeugung haptischer und taktiler Eindrücke.

Andere Gruppen entwickeln VR-Systeme, bei denen ein animiertes 3D-Bild in eine reale Szene eingeblendet wird, um zum Beispiel dem Arzt während einer Operation wichtige Zusatzinformationen zu liefern (Völter et al., 1995; Blackwell et al., 1998). Die perspektivgerechte Einblendung erfolgt über halbdurchsichtige Flachbildschirme, Stereodatenbrillen (Tang et al., 1998; Rolland und Fuchs, 2000) oder chirurgische Mikroskope (Edwards et al., 1999).

Im Bereich der Biomechanik befaßt sich eine Vielzahl von Studien mit der interaktiven graphischen Animation anatomischer Strukturen einzelner Gelenke, wie zum Beispiel dem Kniegelenk (Garg und Walker, 1990; Baillot et al., 2000). In einer Patentschrift von Aouni-Aleshian et al. (2000) werden derartige mathematische Simulationen für allgemeine Gelenke beschrieben. Diesen Ansätzen ist gemeinsam, daß eine Berechnung biomechanischer Eigenschaften und die graphische Animation der berechneten Gelenkverhältnisse oder Gelenkbewegungen erfolgen. Solche Simulationsansätze werden vorrangig zum anatomischen Studium sowie zur präoperativen Planung und ansatzweise zur intraoperativen Navigation in der Orthopädie eingesetzt. Ein Animationsansatz, der ausschließlich auf der Basis von Bewegungsgleichungen beruht, wird in einem Patent von Handelman et al. (2041) beschrieben.

Weitere grafikbasierte Systeme wurden nicht nur zur Darstellung anatomischer Zusammenhänge, sondern auch zum Erlernen und Trainieren medizinischer Behandlungsabläufe entwickelt (Patente von Mukai et al., 1999; Ramshaw et al., 1995). Vorteil dieser Ansätze ist, daß die Benutzung realer Objekte oder physikalischer Ersatzobjekte nicht notwendig ist. Allerdings erfolgt keine praktische, sondern nur eine theoretische Ausbildung des Bedieners. Allgemein formuliert wurde diese Idee der (audio-)visuellen Lehre für Anwendungen auch außerhalb der Medizin in einem Patent von Barrabee (1989).

d. Interaktion mit passiven mechanischen Systemen:

In der Medizin werden die praktische Ausbildung und das Training vorrangig am Patienten, in Einzelfällen auch am anatomischen Präparat (Leichnam) oder in Tierversuchen vorgenommen. Selten kommen passive mechanische Modelle von Gelenken, Knochen, Muskeln, Organen oder Weichteilen zum Einsatz. Verschiedene Firmen (Fa. 3B SCIENTIFIC, Fa. Somso Modelle u. a.) bieten Kunststoffmodelle kommerziell an, die sich aber lediglich zur räumlichen Veranschaulichung anatomischer Strukturen für die Theorieausbildung und nicht zur Darstellung physiologischer oder pathologischer Funktionen eignen. Ein realistisches und umfangreiches Training anhand verschiedener Fallbeispiele ist damit nicht möglich, da die Modelle nur eingeschränkt beweglich und deformierbar sind und nicht die notwendige Verstellbarkeit bzw. Anpaßbarkeit an verschiedene Verletzungsarten und Patienten mit unterschiedlichen Anthropometrien erlauben.

Es gibt zahlreiche Patentanmeldungen zu mechanischen Modellen mit realitätsnachempfundenen Gelenkeigenschaften, die als Dummies in der Fahrzeugversuchstechnik (Patente von Woley und Welanin, 1981; Daniel, 1982; Kortge, 1980; Denton und Morgan, 1984) oder zum Training von Rettungsversuchen (Patent von Trivett, 2000) verwendet werden. Manche dieser Modelle ermöglichen eine beschränkte Modifikation der Gelenkeigenschaften (Patent von Woley und Welanin, 1981) und sogar näherungsweise Messungen auftretender innerer Kräfte (Patent von Daniel, 1982), ihr Aufbau ist jedoch anatomisch inkorrekt, und die Verstellmöglichkeiten sind stark eingeschränkt, so daß diese Modelle für das klinische Training ungeeignet sind.

Andere mechanische Lösungen, mit denen sich bestimmte Pathologien darstellen lassen, beschränken sich im wesentlichen auf Knochenbrüche (Patente von Sandegard, 1982; Lindskog und Sandegard, 1989; Rosen, 1986; Smreka, 1973). Eine sehr aufwendige mechanische Apparatur zur Simulation von Muskel-/Bandverletzungen wurde von Mason et al. (1989, Patent) entwickelt, zum Patent angemeldet und gebaut (Paulos et al., 1991). Im wesentlichen ist in dieser Erfindung eine reale Knieanatomie durch künstliche technische Komponenten nachgebaut. Die Apparatur besteht aus einem künstlichen Ober- und Unterschenkelknochen, die durch Seilzüge zusammengehalten werden. Die Seilzüge entsprechen dabei den wichtigsten Kniebändern und Kniemuskeln, die mit Kraftmeßzellen verbunden sind. Daher können die während einer Bewegung auftretenden Kräfte in den entsprechenden Kniekomponenten ermittelt werden. Diese Apparatur eignet sich sehr gut zur Beobachtung verschiedener hnieverletzungsvorgänge und mit Einschränkung zum Test von Knieschienen und anderen orthopädischen Geräten (Paulos et al., 1991). Die Anzahl anatomischer Komponenten, Bewegungsfreiheitsgrade und darstellbarer Knieverletzungen ist aber stark begrenzt.

Eine weitere Gruppe sind palpierbare passive Kunststoffmodelle. Mehrere Lagen oder Einschlüsse von Materialien verschiedener Härte/Form ergeben ein Objekt, das sich bei Abtastung sehr realitätsnah anfühlt und so z. B. zum Training der Brustpalpation in der Gynäkologie (Patente von Goldstein, 1989; Fasse, 1975), zum Injektionstraining (Patent von Graham und Sabelman, 1953), zum Üben chirurgischer Schnitte (Patente von Trivett, 2000; Lewis und Nusbaum, 1984), zur Palpation von Organen (Greenfield und Johnson, 1993) und zum Trainieren bestimmter Maßnahmen am Oberkörper, wie Herzmassage, Palpation des Pulses, Blutabnahme, Palpation usw. (Patente von Voights, 1982; Baldwin, 1988; Kohnke, 1992) eingesetzt werden kann. Andere Modelle sind durch realitätsnahes Aussehen gekennzeichnet und können z. B. zum Training von Kniearthroskopien oder anderer chirurgischer Eingriffe am Knie verwendet werden (Patent von Strover und Strover, 1999).

Passive mechanische Systeme weisen spezifische, systemimmanente Eigenschaften auf, die nur unzureichend an unterschiedliche reale Situationen angepaßt werden können.

e. Aktive Systeme mit mechatronischen Anatomiekomponenten:

Es existieren zahlreiche Ansätze, bei denen anatomische Komponenten (z. B. Gliedma-ßen) durch entsprechende Aktorik aktiv eine bestimmte, vorgegebene Sollbewegung ausführen. Beispiele solcher meist humanoider Bewegungsmaschinen sind ein künstlicher menschlicher Rumpf zur Nachahmung von Oberkörperbewegungen (Patent von Johnson und Gurr, 1995), ein künstliches motorisiertes Handgelenk für Exoprothesen (Patent von Yasutaro, 1996), ein künstliches Einzelgelenk mit aktiver Bremse (Patent von Haffner und Pizer, 1977), ein künstlicher Rumpf mit Herzbewegungsaktorik (Patent von Messmore, 1986).

Aktive Systeme führen jedoch nur vorbestimmte Bewegungen aus, die von der untersuchenden Person (Arzt) nicht beeinflußt werden können.

Zusammenfassung des Standes der Technik:

Es existieren passive, aktive und interaktive Systeme zur Simulation anatomischer Komponenten oder physiologischer Funktionen von Mensch oder Tier. Die bisherigen Systeme beschränken sich auf:

- instrumentenbasierte, mechatronische Ansätze zur Vermittlung von Berühreindrücken, die bei Kontakt eines Instruments mit einer simulierten Anatomie entstehen und auf das Instrument einwirken,
- mechatronische Ansätze mit haptisch-taklilem Display zur Vermittlung direkter Berühreindrücke auf die Finger und Fingerspitzen (z. B. zur Palpationssimulation).
- elektronisch-visuelle Systeme (graphische Animationen) sowie
- bewegliche passive mechanische Systeme (Puppen, Kunststoffmodelle usw.)

Zitierte Fachliteratur:

[1] Baillot, Y., Rolland, J. P., Lin K.-C., Wright, D. L. (2000): Automatic modeling of knee-joint motion for the virtual reality dynamic anatomy (VRDA) tool. Precence 9, S. 223-235.
[2] Baur, C., Guzzoni, D., Georg, O. (1998) VIRGY: A virtual reality and force feedback based endoscopic surgery simulator. Stud. Health Technol. Inform. 50, S. 110-116.
[3] Blackwell, M., Morgan, F., DiGioia, A. M. (1998): Augmented reality and its future in orthopaedics. Clinical Orthopaedics and Related Research 354, S. 111-122.
[4] Burdea, G., Patounakis, G., Popescu, V., Weiss, R. (1999): VR-based training for diagnosis of prostate cancer. IEEE Trans. Biomed. Eng. 46, S. 1253-1260.
[5] Dang, T., Annaswamy, T. M., Srinivasan, M. A. (2001): Development and evaluation of an epidural injection simulator with force feedback for medical training. Stud. Health Technol. Inform. 81, S. 97-102.
[6] Delp, S. L., Loan, P., Basdogan, C., Rosen, J. M. (1997): Surgical simulation: an emerging technology for training in emergency medicine. Presence 6, S. 147-159.

[7] Edwards, P. J., King, A. P., Hawkes, D. J. et al. (1999): Stereo augmented reality in the surgical microscope. Stud. Health. Technol. Inform. 62, S. 102-108.

[8] Garg, A., Walker, P. S. (1990): Prediction of total knee motion using a three-dimensional computer-graphics model. J. Biomechanics 23, S. 48-58.

[9] Höhne, K.-H. (2000): VOXEL-MAN 3D-Navigator. CD-ROM/Diskette, Springer-Verlag, Berlin.

[10] Howe, R. D., Peine, W. J., Kontarinis, D. A., Son, J. S. (1995): Remote palpation technology for surgical applications. IEEE Engineering in Medicine and Biology Magazine 14, S. 318-323.

[11] Keeve, E., Kikinis, R. (1999): Biomechanics-based simulation of knee dynamics. Proc. of the IEEE-EMBS conference, Atlanta, USA, Oct. 13-16, S. 558.

[12] Kling-Petersen, T., Rydmark, M. (2000): Modeling and modification of medical 3D objects. The benefit of using a haptic modeling tool. Proc. of the Medicine Meets Virtual Reality Conference, Newport Beach, USA, S. 162-167.

[13] Kühnapfel, U., Kühn, C., Hübner, M., Krumm, H. G., Maaß, H., Neisius, B. (1997): The Karlsruhe endoscopic surgery trainer as an example for virtual reality in medical education. Minimally Invasive Therapy and Allied Technologies, 6, S. 122-125.

[14] Langrana, N. A., Burdea, G., Lange, K., Gomez, D., Deshpande, S. (1994): Dynamic force feedback in a virtual knee palpation, Artificial Intelligence in Medicine, 6, S. 321-333.

[15] Müller, W., Bockholt, U. (1998): The virtual reality arthroscopy training simulator. Stud. Health Technol. Inform. 50, S. 13-19.

[16] Paulos, L. E., Cawley, P. W., France, E. P. (1991): Impact biomechanics of lateral knee bracing. The anterior cruciate ligament. The American Journal of Sports Medicine, 19, S. 337-342.

[17] Pieper, S., Delp, S., Rosen, J., Fisher, S. (1991): A virtual environment system for simulation of leg surgery. Proc. Stereoscopic Display and Applications II, SPIE 1457, S. 188-196.

[18] Riener, R., Burgkart, R. (2001): A survey study for the development of virtual reality technologies in orthopedics. 9th Annual Medicine Meets Virtual Reality (MMVR) Conference, Newport Beach, Kalifornien, 24.-27. Januar 2001.

[19] Rolland, J. P., Fuchs, H. (2000): Optical versus video see-through head-mounted displays in medical visualization. Presence 9, S. 287-309.

[20] Rudman, D. T., Stredney, D., Sessanna, D., Yagel, R., Crawfis, R., Heskamp D., Edmond, C. V., Wiet, G. J. (1998): Functional endoscopic sinus surgery training simulator. Laryngoscope 108, S. 1643-1647.

[21] Smith, S., Wan, A., Taffinder, N., Read, S., Emery, R., Darzi, A. (1999): Early experience and validation work with Precedicus VA - the Prosolva virtual reality shoulder arthroscopy trainer. Stud. Health Technol. Inform. 62, S. 337-343.

[22] Szekely, G., Schweitzer, G. et al. (1999): Virtual reality based surgery simulation for endoscopic gynaecology. Stud. Health Technol. Inform. 62, S. 351-357.

[23] Tang, S. L., Kwoh, C.K., Teo, M. Y., Sing, N. W., Ling, K. V. (1998): Augmented reality systems for medical applications. IEEE Engineering in Medicine and Biology Magazine 17, S. 49-58.

[24] Tendick, F., Downes, M., Goktekin, T., Cavusoglu, M. C., Feygin, D., Wu, X., Eyal, R., Hegarty, M., Way, L. W. (2000): A virtual environment testbed for training laparoscopic surgical skills. Presence 9, S. 236-255.

[25] Völter, S., Krämer, K.-L., Niethard, F. U., Ewerbeck, V. (1995): Virtual Reality in der Orthopädie: Prinzipien, Möglichkeiten und Perspektiven. Z. Orthop. 133, S. 492-500.

[26] Ward, J. W., Wills, D. P., Sherman, K. P., Mohson, A. M. (1998): The development of an arthroscopic surgical simulator with haptic feedback. Future Generation Computer Systems Journal 14, S. 243-251.

Zitierte Patente:

[27] Aouni-Aleshian G. H., Blankevoort, L., Kwak, S. D., Mow, V. C. (2000): Three dimensional multibody modelling of anatomical joints. US-Patent Nr. 6 161 080.

[28] Baldwin, J. F. (1988): Training mannequin. US-Patent Nr. 4 773 865.

[29] Barrabee, K. P. (1989): Interactive audio-visual teaching method and device. US-Patent Nr. 4 804 328.

[30] Daniel, R. P. (1982): Force-indicating dummy legs. US-Patent Nr. 4349339.

[31] Denton, R. A., Morgan, C. R. (1984): Crash test dummy lower leg. US-Patent Nr. 4 488433.

[32] Fasse, W. G. (1975): Breast cancer detection training device. US-Patent Nr. 4 001 951.

[33] Goldstein, M. K. (1959): Breast cancer detection model and method for using same. US-Patent Nr. 4 867 686.

[34] Graham, T. E., Sabelman, E. E. (1983): Human skin model for intradermal injection demonstration or training. US-Patent Nr. 4 481 001.

[35] Greenfield, C. L., Johnson, A. L. (1993): Anatomically correct artificial organ replicas for use as teaching aids. US-Patent Nr. 5 518 407.

[36] Haffner, M. P., Pizer, R. S. (1977): Programmable anthropomorphic articulation. US-Patent Nr. 4 000 564.

[37] Handelman, D. A., Lane, S. H., Gullapalli, V. (2001): Limb coordination system for interactive computer animation of articulated characters. US-Patent Nr. 6 191 798.

[38] Holland, S., Childers, B. (1995): Interactive multimedia eye surgery training apparatus and method. US-Patent Nr. 5 454 722.

[39] Jacobus, C. J., Griffin, J. L. (1995): Method and system for simulating medical procedures including virtual reality and control method and system for use therein. US-Patent Nr. 5 769 640.

[40] Johnson, B. S., Gurr, R. H. (1995): Robotic human torso. US-Patent Nr. 5 394 766.

[41] Kohnke, O., B. (1992): Training manikin for practising external cardiac massage. Europäisches Patent Nr. 560 440.

[42] Kortge, J. O. (1980): Knee joint for anthropomorphic dummy. US-Patent Nr. 4235 025.

[43] Kramer, J. F. (1990): Force feedback and textures simulating interface device. US-Patent Nr. 5 184 319.

[44] Kramer, J. F. (1997): Force feedback and texture simulating interface device. US-Patent Nr. 5 631 861.

[45] Lewis, L. A., Nusbaum, B. P., Leeds, H. R. (1984): Simulated skin and method. US-Patent Nr. 4 596 528.

[46] Lindskog, K., Sandegard, J. (1989): Device for teaching treatment of skeletal injuries. US-Patent Nr. 4 802 858.

[47] Mason, J. T., Cawley, P. W., Mason, B. R. (1989): Method of determining stress effects in components of the human knee and anthropomorphic leg device therefor. US Patent Nr. 4 850 877.

[48] Merril, J. R., Millman, A. S. (1996): Computer based medical procedure simulation system. PCT-Anmeldung Nr. WO 96/28800.

[49] Messmore, F. B. (1986): Cardiac training mannikin. US-Patent Nr. 4 601 665.

[50] Mukai, N., Harada, M., Muroi, K. (1999): Medical simulator system and medical simulator notifying apparatus. US-Patent Nr. 6 126 450.

[51] Ogden, A. M., Monroe, M. M., Barnett, D. E. (1999): Apparatus for controlling an animated structure. US-Patent Nr. 5 870 842.

[52] Ramshaw, B. J., Garcha, I., Naum, R., Franklin, K. (1998): Interactive medical training system. US-Patent Nr. 5 791 907.

[53] Rosen, B. A. (1986): Training device for setting broken limbs. US-Patent Nr. 4 605 373.

[54] Rosenberg, L. B., Jackson, B. G. (1996): Electromechanical human-computer interface with force feedback. US-Patent Nr. 5 576 727.

[55] Sandegard, J. D. (1982): Device for use when training the appropriate handling of a dislocated injury on a part of a body. US-Patent Nr. 4 350 490.

[56] Smreka, J. G. (1975): Breakable leg. US-Patent Nr. 3 895 451.

[57] Strover, S. M., Strover, A. E. (1999): Surgical model. US-Patent Nr. 5 967 790.

[58] Taisuke S. (2000): Limb driving apparatus. Japanisches Patent Nr. 10 373 847.

[59] Trivett, I. D. (2000): Artificial limb for training dummy. Europäisches Patent Nr. EP 987667.

[60] Voights, D. L. (1982): Palpation and ascultation teaching method and apparatus. US-Patent Nr. 4 411 629.

[61] Woley, P. F., Welanin, M. J. (1981): Knee joint for anthropomorphic dummy. US-Patent Nr. 4 276 032.

[62] Yasutaro, M. (1996): Robot device. Japanisches Patent Nr. 6 239 420.

Es ist die Aufgabe der vorliegenden Erfindung, die Möglichkeiten zur Simulation der biomechanischen Eigenschaften menschlicher oder tierischer Körperabschnitte mit Gelenken weiter zu verbessern, um die in dem vorstehend beschriebenen Stand der Technik auf gezeigten Mängel zu verringern.

Diese Aufgabe wird mit einer Vorrichtung nach Anspruch 1 gelöst.

Es wird ein programmierbarer Gelenksimulator zum Nachbilden der biomechanischen Gelenkeigenschaften von menschlichen und tierischen Körperabschnitten bereitgestellt. Der Gelenksimulator simuliert das reale Verhalten des betreffenden natürlichen Körperabschnitts, wenn dieser von einer untersuchenden Person, wie z. B. einem Arzt, mit den Händen erfaßt, abgetastet oder bewegt wird, d. h. der Gelenksimulator reagiert beim Anfassen mit den Händen wie ein gesunder oder mit unterschiedlichen Krankheiten oder Verletzungen behafteter natürlicher Körperabschnitt. Durch die Eigenschaft der Programmierbarkeit ist es möglich, "per Knopfdruck" dem Gelenksimulator die unterschiedlichsten Krankheiten und Verletzungen zuzuweisen.

Der erfindungsgemäße Gelenksimulator weist nachfolgende Merkmale auf:

- Einen Modellkörper, der in der Form im wesentlichen dem zu untersuchenden Körperabschnitt mit dem betreffenden Gelenk entspricht. Bei einer Simulation eines menschlichen Kniegelenks werden demnach ein Unterschenkel und ein Oberschenkel nachgebildet, die vorzugsweise die Härte, Form und Größe eines natürlichen menschlichen Beines aufweisen. Es sind jedoch auch Anwendungsfälle möglich, bei denen der Modellkörper kleiner oder größer als der natürliche Körperabschnitt ist. Vorzugsweise wird der Modellkörper aus Kunststoff gefertigt.

- Es sind steuerbare Antriebselemente vorgesehen, die mit dem Modellkörper mechanisch gekoppelt sind. Die Ausgestaltung der Antriebselemente und die Kopplung sind fachmännisch so vorgenommen, daß durch die manuelle Einflußnahme der untersuchenden Person realitätsnahe Bewegungen und/oder Relativbewegungen des Modellkörpers bewirkbar sind. Unabhängig von der konkreten Ausgestaltung der Antriebselemente und deren Kopplung mit dem Modellkörper muß lediglich die Voraussetzung erfüllt sein, daß z. B. der Modellkörper eines Beines vom Arzt näherungsweise ebenso bewegt werden kann wie ein natürliches Bein. Diese Zusammenhänge werden in den Ausführungsbeispielen weiter erläutert.

- An den Antriebselementen und/oder an der mechanischen Kopplung zum Modellkörper ist eine Sensoranordnung zum Detektieren der eingeleiteten Kräfte und Bewegungen vorgesehen. Die Sensoranordnung ist so mit dem mechanisch-kinematischen Modellkörper verbunden, daß die von der untersuchenden Person eingeleiteten Kräfte und verursachten Bewegungen als Meßsignale abgebildet werden. Für das Detektieren von Kräften und Bewegungen, wie z. B. Verschiebungen und Drehungen, Längenänderungen oder Drelunomente, stehen dem Fachmann für Meß- und Regelungstechnik Sensoren zur Messung von Kräften, Wegen, Winkeln und Drehmomenten zur Auswahl. Demgemäß erfolgt die Auswahl unter dem Gesichtspunkt der Funktionalität und der Kosten. Dazu werden in den Ausführungsbeispielen sehr detaillierte Informationen und Hinweise gegeben.

- Die Meßsignale werden einer programmierbaren Steuervorrichtung zugeführt, die signaltechnisch mit einem Rechner verbunden ist. Die Steuervorrichtung ist in Verbindung mit Steuerungsalgorithmen so eingerichtet, um die Antriebselemente in Abhängigkeit von den manuell aufgebrachten Kräften und den eingeleiteten Verschiebungen, die von der untersuchenden Person verursacht werden, zu steuern. Die Steuervorrichtung bewirkt, daß bei Einwirkung der von der untersuchenden Person aufgebrachten Kräfte derartige Reaktionskräfte und Bewegungen erzeugt werden, die dem biomechanischen Verhalten des realen Körperabschnitts entsprechen.

Wenn somit ein Arzt z. B. das mechanisch-kinematische Kniegelenkmodell anfaßt und auf eine Weise bewegt, wie er auch ein Bein eines Menschen zum Zweck der Untersuchung bewegen würde, werden die von dem Arzt eingeleiteten Kräfte und Bewegungen gemessen, wozu vorzugsweise Sensoren, die ein elektrisches Ausgangssignal erzeugen, eingesetzt werden. Diese Ausgangssignale der Sensoren werden der Regelvorrichtung zugeführt. Mittels eines Programms werden die Antriebselemente so geregelt, daß die gleichen Bewegungen und Reaktionskräfte vom Arzt haptisch erfaßt, d. h. gespürt oder empfunden werden, wie bei einer Untersuchung an einem natürlichen Bein. Es ist für den Fachmann klar, daß die gleichen Ausführungen für jeden Körperabschnitt gelten, der ein Gelenk aufweist, wie z. B. die Gelenke der oberen Extremitäten (Schulter, Ellenbogen, Handgelenk) und unteren Extremitäten (Hüfte, Knie, Sprunggelenk). Bei einem interaktiven Kiefergelenk spürt die untersuchende Person die passiven Eigenschaften des Kiefergelenks bei Bewegung des Unterkiefers oder beim Öffnen des Mundes.

Grundsätzlich ist die Erfindung auch für interaktive Mehrgelenke anwendbar. So können z. B. das Rückgrad, Finger, Zehen, Hand- und Fußwurzelknochen als Aneinanderreihung mehrerer Einzelgelenke modelliert werden. Dabei können Gruppen von Segmenten (z. B. Wirbel) zu festen Segmenten zusammengefaßt oder kann auch jedes Segment einzeln betrachtet werden. Jedes dieser Segmente ist mit entsprechender Aktorik verbunden, so daß der Bediener - nach demselben Prinzip wie beim interaktiven Einzelgelenk - mit einem oder mehreren Segmenten/Wirbeln interagieren kann.

Ferner soll erwähnt werden, daß auch solche Effekte, wie z. B. der Einfluß der Leichenstarre auf die Gelenkbeweglichkeit simuliert werden können. Die Anwendung ist auch nicht auf menschliche Körperabschnitte beschränkt und kann auch zur Ausbildung von Tierärzten eingesetzt werden.

Es ist besonders zu erwähnen, daß die Ausbildung des mechanisch-kinematischen Modells, die Art der Antriebselemente (Aktuatoren) und die fachmännische Gestaltung der Sensorkopplungen in jedem Anwendungsfall unterschiedlich sein kann. Weitere und detaillierte Informationen über Regelungsalgorithmen und Konstruktionshinweise zum Bau von Gelenksimulatoren zur Simulation verschiedener Gelenke werden im Ausführungsbeispiel offenbart.

Die Programmierbarkeit der Steuervorrichtung ermöglicht, daß eine Vielzahl von unterschiedlichen biomechanischen Eigenschaften simuliert werden kann, um somit eine Vielzahl von pathologischen Zuständen des Körperabschnitts zu simulieren.

Durch diese Merkmalskombination wurde ein multivalent nutzbare Gelenksimulator für die Simulation der unterschiedlichsten medizinischen Zustände eines Körperabschnitts geschaffen. Es ist somit möglich, die unterschiedlichsten Krankheits- und Verletzungszustände abrufbar bereitzustellen. Damit kann erstmalig das langwierige Training am Patienten weitgehend entfallen. Es ist auch zu beachten, daß ein Training an einem lebenden Menschen oder einem Tier nicht beliebig oft durchgeführt werden kann, da bestimmte Untersuchungen Schmerzen verursachen oder auch zu Schädigungen führen können.

Eine Weiterentwicklung der Erfindung nach Anspruch 2 weist eine optische Displayvorrichtung auf, die signaltechnisch so mit der Gelenksimulator verbunden ist, daß die untersuchende Person während der Tätigkeit an dem mechanisch-kinematischen Modellkörper eine bildhafte Darstellung des natürlichen Körperabschnitts sieht, der gerade simuliert wird. Die bildhaften Darstellungen können z. B. kernspintomographisch oder röntgentechnisch erzeugt sein. Es können jedoch auch computergenerierte graphische Abbildungen oder spezielle Animationen dargestellt werden. Bei einer Gelenksimulation könnte z. B. wahlweise das Gelenk allein oder das Gelenk mit den umgebenden Bändern gezeigt werden. Weiterhin können Zusatzinformationen, wie z. B. auftretende Kräfte oder Spannungen, angezeigt werden. Es können auch bildhafte Hinweise gegeben werden, an welcher Stelle die untersuchende Person den Körperabschnitt anzufassen hat. Mit der Weiterentwicklung der Erfindung nach Anspruch 2 werden der Informationsgehalt und der Lerneffekt wesentlich erhöht.

Eine Weiterentwicklung der Erfindung nach Anspruch 3 weist eine akustische Displayvorrichtung auf, die signaltechnisch so mit der Gelenksimulator verbunden ist, daß die untersuchende Person während der Tätigkeit am mechanisch-kinematischen Modellkörper akustische Informationen erhält. Es können z. B. Geräusche wiedergegeben werden, die bei der Bewegung eines Gelenkes entstehen. Es sind jedoch auch durch Schmerz verursachte Lautäußerungen wiederzugeben, die z. B. bei der Bewegung eines kranken Gelenks oder bei Überbeanspruchung eines gesunden Gelenks oder bei übermäßigem Druck auf eine vorbestimmte Stelle des Bauchs vorliegen können. Die akustische Displayvorrichtung ist in einfachster Ausführung ein Lautsprecher oder ein Kopfhörer am Audioausgang der Gelenksimulator. Mit der Weiterentwicklung der Erfindung nach Anspruch 3 werden der Informationsgehalt und der Lerneffekt weiter erhöht.

Bei der Weiterentwicklung der Erfindung nach Anspruch 4 sind zur Wiedergabe von Geräuschen, die bei der Untersuchung durch den untersuchten Körperabschnitt selbst erzeugt werden, in diesem Körperabschnitt Schallerzeugungsmittel integriert. So können z. B. in einem Gelenk Piezo-Kleinstlautsprecher eingebaut sein, die das Einschnappen eines ausgekugelten Gelenks akustisch imitieren, so daß der untersuchenden Person ein sehr realitätsnaher Eindruck vermittelt wird. Auch mit dieser Weiterentwicklung werden der Informationsgehalt erhöht und der Lerneffekt weiter verbessert.

Die Erfindung wird nunmehr anhand von Ausführungsbeispielen in Verbindung mit schematischen Zeichnungen und theoretischen Erklärungen näher erläutert.

Fig. 1a - m    zeigt verschiedene Ausführungsformen eines Kniegelenksimulators.
Fig. 2    zeigt eine Ausführungsform eines Wirbelsäulensimulators.
Fig. 3    zeigt den Querschnitt eines künstlichen Unterschenkels.
Fig. 4    zeigt eine Interpolation rekonstruierter Bilddaten.
Fig. 5    zeigt Zusammenhänge zur Darstellung von Geräuschen.
Fig. 6    zeigt ein Kennlinienfeld zur Simulation von Schmerz.
Fig. 7    zeigt Simulatorkonfigurationen mit arretiertem und beweglichem Oberschenkel.
Fig. 8    zeigt die Admittanzarchitektur in Netzwerkdarstellung.
Fig. 9    zeigt die Impedanzarchitektur in Netzwerkdarstellung.
Fig. 10    zeigt die Bahnregelung im aktiven Betriebsmodus.
Fig. 11    zeigt die haptische Darstellung biomechanischer Knieeigenschaften mittels einer Admittanzarchitektur.
Fig. 12    zeigt die haptische Darstellung biomechanischer Knieeigenschaften mittels einer Impedanzarchitektur.
Fig. 13    zeigt Kräfte und Momente beim Kniesehnenreflex.
Fig. 14    zeigt die Freiheitsgrade des Kniegelenks.
Fig. 15    zeigt eine 3D-Charakteristik der elastischen Kräfte in Schubladenrichtung.
Fig. 16    zeigt eine 3D-Charakteristik des Valgusmoments.
Fig. 17    zeigt eine Kennliniezur Beschreibung der Gelenksteifigkeit.

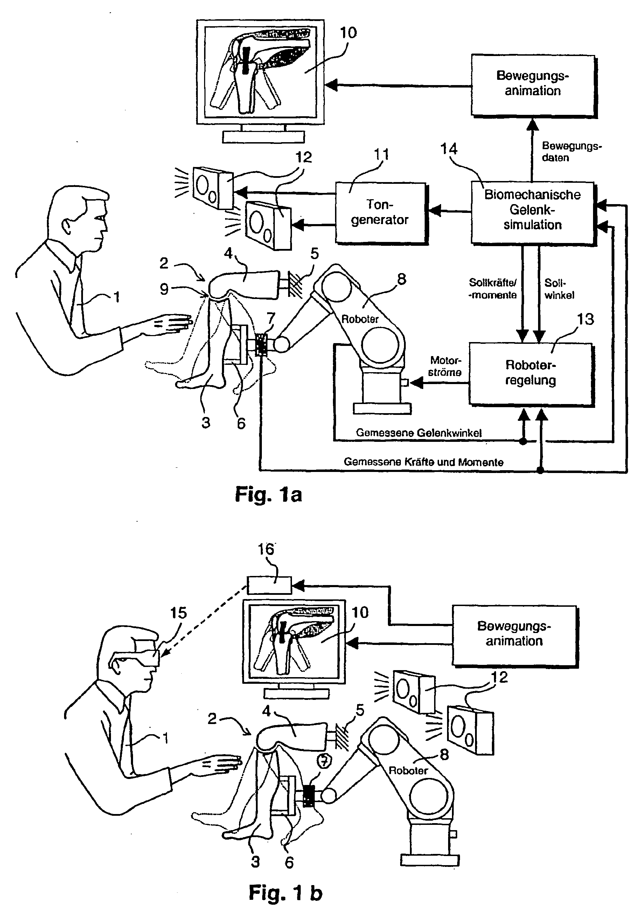

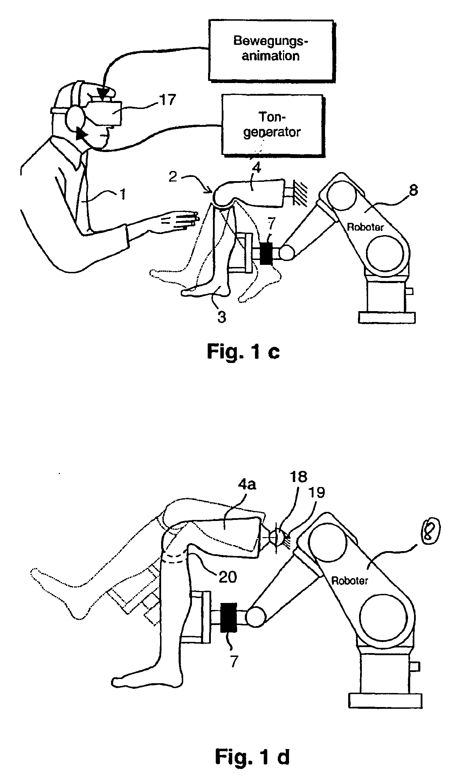

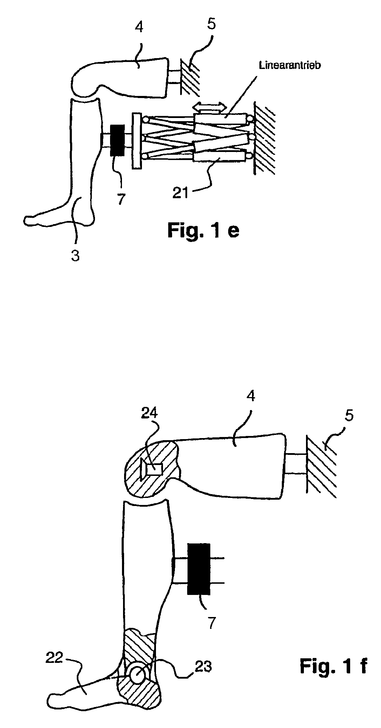

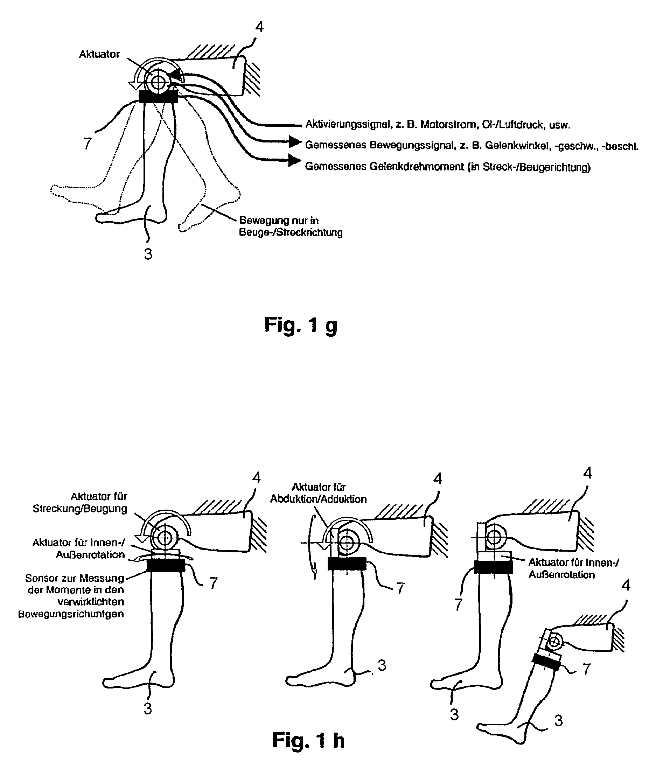

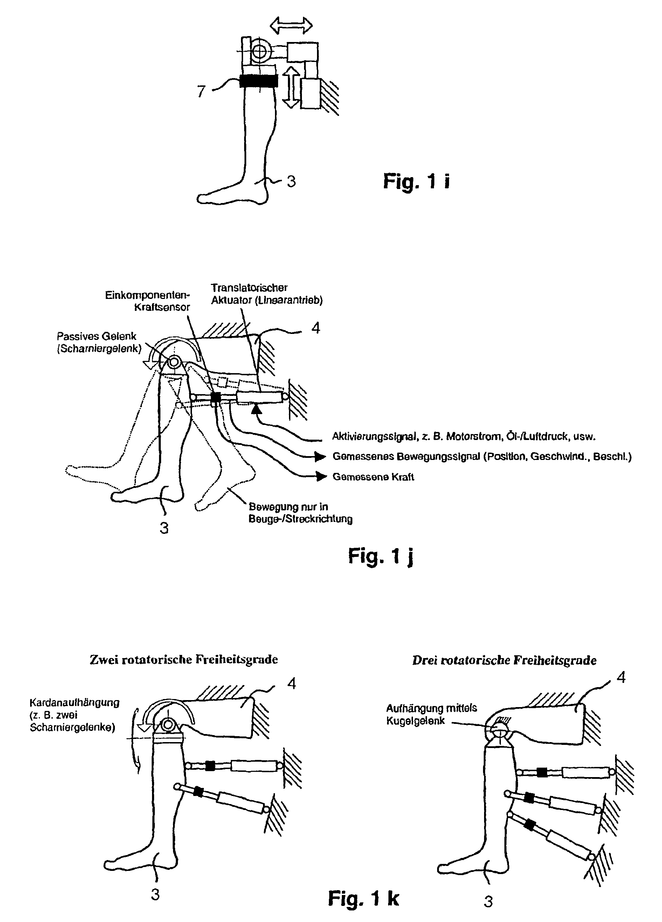

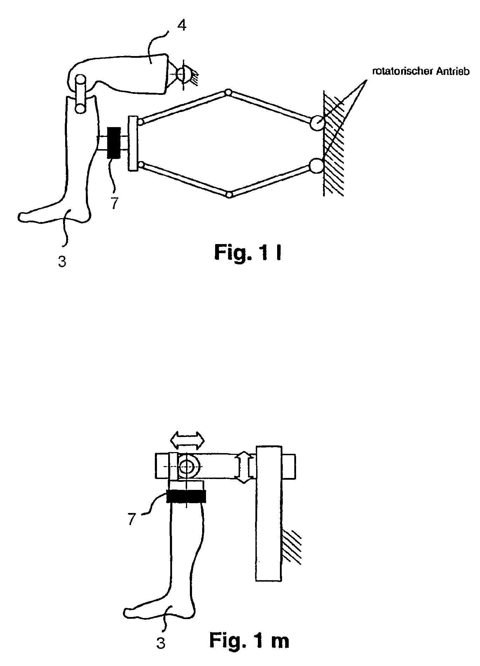

Die Fig. 1 zeigt eine Prinzipdarstellung der Erfindung in einer ersten Ausführungsform als einen interaktiven Kniegelenksimulator. Ein Bediener 1 führt dabei Unterschenkelbewegungen statt am Patienten an einem künstlichen Kniegelenk 2 aus.

Das Kniegelenk 2 setzt sich aus einem künstlichen Unterschenkel 3 und einem künstlichen Oberschenkel 4 zusammen. Beide Segmente besitzen eine realistische Form und anatomiegerechte Härteeigenschaften und erlauben somit das Ertasten anatomisch relevanter Stellen (Femurkondylen, Kniescheibe, Tibiaplateau, Fibulaköpfchen, Tuberositas Tibiae, Schienbeinkante, Knöchel, Fußwurzelknochen, Zehen). Der Oberschenkel 4 ist an einem Rahmen 5 montiert. Er kann in seiner räumlichen Orientierung und Position verstellt werden, ist aber während der Kniegelenkbewegung raumfest. Der Oberschenkel ist notwendig, um die Relativbewegung zwischen Ober- und Unterschenkel optisch und durch Berührung besser erkennen und beurteilen zu können.

Der Unterschenkel 3 ist über ein Verbindungselement 6 und einen Sechskomponenten-Kraft-Momenten-Sensor 7 an einer Kraftaktorik 8 (Roboter) befestigt. Dadurch ist der Unterschenkel 3 im Raum beweglich und kann jede beliebige Position und Orientierung einnehmen. Der zwischen dem Verbindungselement 6 und dem Roboter 8 angeordnete Kraft-Momenten-Sensor 7 erfaßt die von der untersuchenden Person 1 am Unterschenkel 3 eingeleiteten dreidimensionalen Kräfte und Momente und leitet diese an die Roboterregelung und die biomechanische Gelenksimulation (im Computer) weiter. Ober- und Unterschenkel sind im Gelenkbereich für jede Unterschenkellage berührungsfrei. Ein sich daraus ergebender Spalt 9 ist nur ca. 1 mm breit, damit das Bein ein realistisches Aussehen bewahrt.

Die Kraftaktorik 8 besteht aus einer seriellen Kinematik, d. h., mehrere Robotersegmente sind über aktiv angetriebene Drehachsen miteinander seriell verbunden. Die Richtung der Drehachsen ist so gewählt, daß der Endeffektor des Roboters und die daran fest angeordneten Komponenten Sensor, Verbindungselement und Unterschenkel in sechs Freiheitsgraden (drei Positionen und drei Orientierungen) bewegt werden können. Die Gelenkwinkel des Roboters 8 werden über Gelenkwinkelsensoren erfaßt und an die Roboterregelung und biomechanische Gelenksimulation weitergegeben. Dort werden aus den Gelenkwinkeldaten die sechs Freiheitsgrade des Roboterendeffektors und damit des Unterschenkels bestimmt.

Aus den im biomechanischen Gelenkmodell aufbereiteten Bewegungsdaten des Unterschenkels werden in einer Bewegungsanimationsrechnung die Bewegungen und Verformungen anatomischer Komponenten ermittelt und auf einem Monitor 10 (graphisches Display) visualisiert.

Ferner werden aus den biomechanischen Gelenkberechnungen Kommandos einem Tongenerator 11 zugeleitet. Dieser sorgt dafür, daß situationsabhängige Soundsamples durch ein Stereolautsprecherpaar 12 wiedergegeben werden (akustisches Display).

Die Interaktion zwischen Bediener und Unterschenkel samt Kraftaktorik besteht darin, daß der Bediener (gleichbedeutend mit dem Master) den Unterschenkel berührt und auf diesen eine Kraft in eine gewünschte Richtung ausübt. Der Unterschenkel (stellt zusammen mit der Kraftaktorik den Slave dar) reagiert darauf, indem er sich gemäß den natürlichen, passiven Eigenschaften bewegt.

Dies kann prinzipiell nach zwei Methoden erfolgen:
Die erste Methode (Admittanzregelung) besteht darin, daß die bei Berührung des Unterschenkels 3 auftretenden Kräfte und Momente durch den Kraft-Momenten-Sensor 7 erfaßt und in die biomechanische Gelenksimulation übertragen werden. Dort wird die resultierende Bewegung des Unterschenkels 3 berechnet und als Sollgröße an eine Roboterregelung 13 übergegeben. Die Roboterregelung 13 vergleicht die errechnete Sollbewegung mit der gemessenen Roboterbewegung und führt dem Roboter 8 Motorströme in einer Weise zu, daß der Positions- und der Geschwindigkeitsfehler zwischen gemessener und errechneter Bewegung minimal werden.

In der zweiten Methode (Impedanzregelung) wird die durch Einwirkung von Kräften und Momenten erzwungene Positions- und Orientierungsänderung erfaßt und in eine biomechanische Gelenksimulation 14 übertragen, die daraufhin die korrespondierenden Kräfte und Momente berechnet und als Sollgrößen an die Roboterregelung 13 weitergibt. Die Roboterregelung 13 vergleicht die berechneten Sollkräfte und -momente mit den tatsächlich auftretenden und bewegt den Roboter 8 so, daß der auftretende Kraft-Momenten-Fehler minimal wird. Es kann zwischen den beiden Regelungsansätzen (Admittanz- und Impedanzregelung) wechselseitig geschaltet werden oder eine kombinierte Strategie Anwendung finden.

Die biomechanische Gelenksimulation 14 beinhaltet ein Computermodell eines menschlichen Kniegelenks, das die im Gelenk auftretenden passiven Gelenkkräfte und -momente als Funktion der Unterschenkelbewegung (Raumpositionen/-orientierungen und deren Ableitungen, d. h. Geschwindigkeiten und Beschleunigungen) relativ zum Oberschenkel darstellt. Dadurch können entweder aus den gemessenen Kräften und Momenten die resultierende Bewegung des Unterschenkels (Admittanzregelung) oder aus der gemessenen Unterschenkelbewegung die verantwortlichen Kniekräfte und -momente (Impedanzregelung) berechnet werden.

Durch die Regelung der mechanischen Kraftaktorik hat der Bediener den Eindruck, er habe die Bewegung verursacht. Der künstliche Unterschenkel fühlt sich dabei an, als ob er durch reale, gelenkumspannende anatomische Strukturen (Bänder, Sehnen usw.) mit dem Oberschenkel verbunden ist, obwohl die beiden Segmente 3, 4 nicht miteinander verbunden sind. Durch entsprechende Parameterwahl in der biomechanischen Gelenksimulation 14 lassen sich nicht nur physiologische (gesunde) sondern auch pathologische (krankhafte) Gelenkzustände darstellen und vermitteln.

Aus den im biomechanischen Gelenkmodell 14 aufbereiteten Bewegungsdaten des Unterschenkels 3 werden in einer Bewegungsanimationsrechnung die Bewegungen und Verformungen anatomischer Komponenten, wie z. B. Knochen, Knorpel, Bänder, Menisken, Gelenkkapseln, Muskeln, Sehnen, Haut, ermittelt. Alle Komponenten und deren Bewegungen werden auf einem Monitor 10 visualisiert. Pathologien werden berücksichtigt, indem die verletzten oder veränderten Strukturen und deren untypisches Bewegungsverhalten graphisch animiert werden.

Aus den biomechanischen Gelenkberechnungen werden nach Überschreiten vorgegebener Schwellwerte Kommandos an den Tongenerator geleitet. Dieser ruft dann verschiedene, vom simulierten Patiententyp sowie von der Pathologie, Bewegungs- und Lastsituation abhängige, vorgespeicherte Soundsamples auf und sendet diese als Audioausgabesignal an ein Stereolautsprecherpaar 12. Dadurch können Gelenkgeräusche wiedergegeben und Laute erzeugt werden, die der simulierte Patiententyp z. B. als Schmerzreaktion bei Bewegung eines verletzten Gelenks artikuliert.

Fig. 1b zeigt ein verändertes graphisches Display, bei dem durch Verwendung einer Shutterbrille 15 ein dreidimensionaler Bildeindruck mittels des Monitors beim Bediener erzeugt werden kann. Dazu generiert der Monitor abwechselnd ein Bild für das rechte und linke Auge. Die Shutterbrille 15 schaltet im Gleichlauf mit dem Monitor 10 wechselseitig die Lichtdurchlässigkeit des rechten und linken Brillenglases. Da die Bildfolge derart schnell ist, daß das menschliche Gehirn nicht mehr jedes Bild einzeln verarbeiten kann, ergibt sich ein dreidimensionaler Bildeindruck. Der Gleichlauf zwischen Monitorbild und Shutterbrille wird durch eine Sendeeinheit 16 gesteuert, die in der Nähe der Shutterbrille aufgestellt ist. Sie sendet Impulse an die Shutterbrille, die daraufhin mit vernachlässigbarer Verzögerung das rechte oder linke Brillenglas schließt. Monitorbild und Sendeeinheit werden zeitgleich vom Computer (Bewegungsanimation) angesteuert, so daß ein Gleichlauf zwischen Monitorbild und Shutterbrille immer gewährleistet ist.

Fig. 1c zeigt ein verändertes graphisches und akustisches Display, bei dem ein Stereodatenhelm (Head-Mounted-Display, HMD) verwendet wird. Durch die Projektion zweier getrennter Bilder auf beide Augen wird ein realistischer dreidimensionaler Bildeindruck erzielt. Die Akustik wird dem Bediener über einen Stereokopfhörer vermittelt.

Die Fig. 1d zeigt eine Prinzipdarstellung des haptischen Displays des interaktiven Kniegelenks, bei der sich der künstliche Oberschenkel 4a während der Gelenkbewegung passiv mitbewegt. Am proximalen Ende (Bereich des Hüftgelenks) ist der Oberschenkel 4a über ein Kugelgelenk 18 an einem raumfesten Rahmen 19 befestigt. Das distale Ende des künstlichen Oberschenkels (Bereich des Kniegelenks) ist mit dem Unterschenkel 3 durch eine elastische Kunsthaut 20 verbunden, wodurch sich der Oberschenkel 4a passiv mit dem Unterschenkel 3 mitbewegt. Damit sich der Oberschenkel 4a bei einer axialen Rotation (Innen-/Außenrotation) des Unterschenkels 3 nicht mit diesem passiv mitbewegt, ist es notwendig, den rotatorischen Freiheitsgrad des Kugelgelenks 18 im Hüftbereich um die Längsachse arretierbar zu gestalten.

Bei der Wahl des verbindenden Materials ist darauf zu achten, daß die Aufhängung des Oberschenkels möglichst statisch stabil erfolgt, d. h., der Oberschenkel darf weder verschieblich sein, da er sonst bei Berührung oder unter dem Einfluß der Schwerkraft wegdrehen würde, noch darf er vorspannbar sein, da dies zu Verspannungen im System, einschließlich den damit einhergehenden Verfälschungen (z. B. fehlerhafte Kraft- und Momentenmeßwerte).

Die Fig. 1e zeigt die Prinzipdarstellung eines haptischen Displays, bestehend aus einer Kraftaktorik mit einer parallelen Kinematik 21 (Hexapodroboter, Stewartplattform). Diese zeichnet sich dadurch aus, daß sie aus sechs Linearantrieben aufgebaut ist. Durch Längenveränderungen in den sechs Antrieben kann jede beliebige, anatomisch sinnvolle dreidimensionale Position und Orientierung des Endeffektors eingestellt werden. Am Endeffektor ist ein Sechskomponenten-Kraft-Momenten-Sensor angebracht, der seine Meßsignale an die Roboterregelung und biomechanische Gelenksimulation weiterleitet. Am Sensor ist über ein Verbindungselement der künstliche Unterschenkel angebracht, mit dem der Bediener in Interaktion steht.

Die Fig. 1f zeigt die Prinzipdarstellung für Beinsegmente mit einer integrierten Aktorik. Der Unterschenkel besteht hierbei aus den beiden Segmenten Fuß 22 und Schenkel, die miteinander gelenkig verbunden sind und mit einem Motor aktiv angetrieben werden. Ein motorisiertes Gelenk 23 ist mit Kunststoff umhüllt, so daß der künstliche Unterschenkel mit dem Fuß anatomiegerecht geformt ist und bewegt werden kann. Die Bewegung des Fußgelenks erfolgt mittels einer einfachen Steuerung.

Ferner ist am distalen Ende des Oberschenkels im Bereich des Kniegelenks ein Lautsprecher 24 integriert. Die anatomiegerechte Form und Härte des Oberschenkels bleibt erhalten. Die bei der Bewegung auftretenden Gelenkgeräusche werden über diesen Lautsprecher ausgegeben, wodurch für den Bediener eine realistische Ortung des Geräusches möglich ist.

Die Fig. 1g bis Fig. 1m zeigen weitere konstruktive Details eines Kniegelenksimulators. Die verschiedenen Ausführungen sind in anschaulichen Darstellungen gezeigt, so daß für den Fachmann auf Wiederholungen bei der Beschreibung verzichtet werden kann.

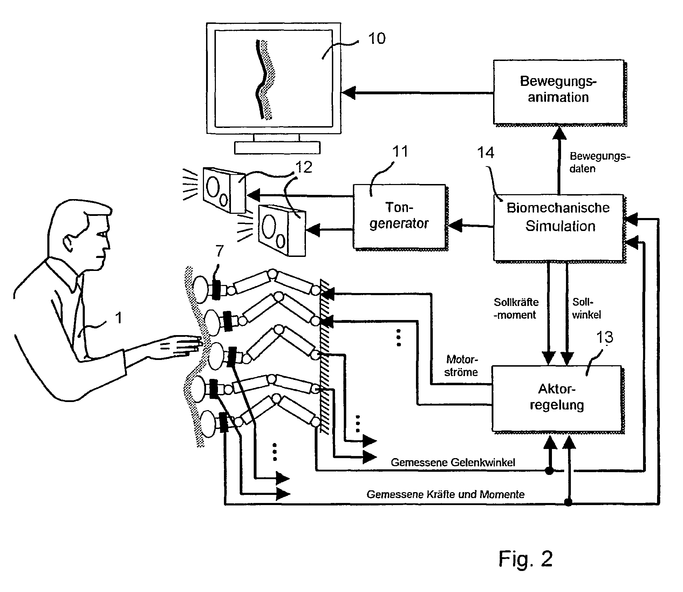

Die Fig. 2 zeigt einen Wirbelsäulengelenksimulator, der im Aufbau und der Funktion prinzipiell dem Gelenksimulator aus Fig. 1a entspricht. Mehrere Sensor-Aktor-Komponenten Komponenten sind über eine elastische Membran miteinander verbunden. Die ellipsenförmigen Endeffektoren stellen die einzelnen Wirbelkörper des virtuellen Patienten dar. Die Haut wird durch die elastische Membran simuliert. Sie sorgt dafür, daß die Spalten zwischen den Wirbelkörpern überdeckt werden und sich die künstliche Hautoberfläche glatt anfühlt. Die Interaktion der Wirbelkörper untereinander wird durch die Aktoren, Sensoren und Regelungsstrategien simuliert. D.h. wenn der Arzt auf einen Wirbel eine Kraft ausübt und diesen bewegt, so wird Kraft und Bewegung erfaßt und so weiterverarbeitet, daß sich die benachbarten Wirbel scheinbar passiv mitbewegen.

Die nachfolgenden Ausführungen dienen der vollständigen Offenbarung der erfindungsgemäßen technischen Lehre. Dazu wird auch die Theorie der Regelung und Steuerung eingehend behandelt und ausführlich erläutert, wie der Fachmann vorzugehen hat, um für ein spezifisches Gelenk einen Gelenksimulator bauen zu können. Bei den Erläuterungen wird der Kniegelenksimulator zu Grunde gelegt.

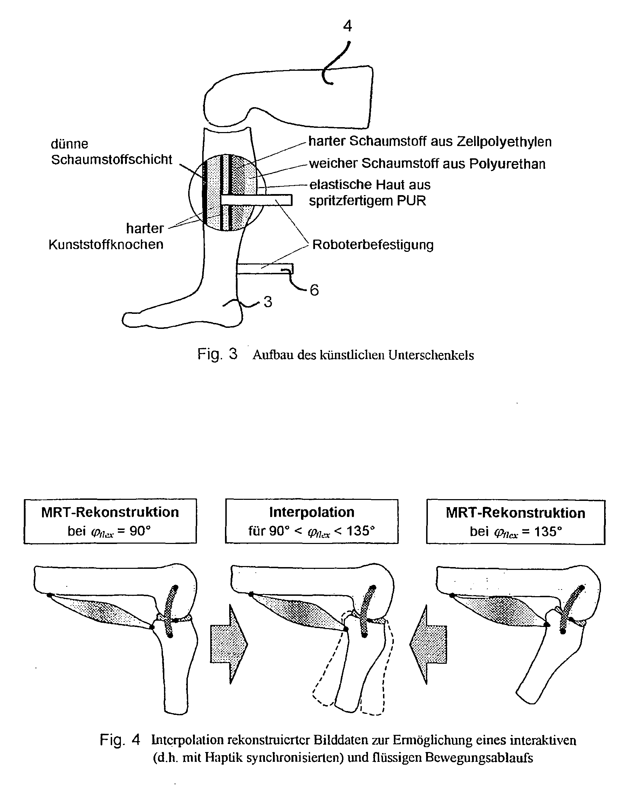

Bei der Gestaltung der künstlichen Beinsegmente wurde zur Erzielung anatomiegerechter Abmessungen und Härteeigenschaften ein Modellknochen mit mehreren Kunststoffscltichten verschiedener Härten umhüllt (Fig. 3). Das Beinskelett ermöglicht nach dem Umhüllen mit Schaumstoffscltichten eine realistische Palpation prominenter Knochenstellen, wie z.B. des Fibulaköpfchens oder des Knöchels. Körperstellen, die zwischen Knochen und Hautoberfläche nur eine geringe Dicke aufweisen, wie z.B. am Schienbein, an der Patella oder am Knöchel, werden durch Aufkleben dünner Kunststoffschichten (2 bis 4 mm Dikke, Shore Härte A18 bis A25) modelliert. An Stellen, wo sich Muskelpartien befinden, werden härtere Zellpolyethylenschichten (10 bis 20mm Dicke, Shore Härten A20 bis A40) mehrschichtig aufgeklebt, und so zurechtgeschliffen, daß sich die anatomiegerechten Formen der Muskelkonturen abzeichnen. Anschließend wird ein weicher Polyurethan Schaum übergezogen, so daß eine etwa 1 bis 3 cm dicke, sich echt anfühlende Oberflächenschicht entsteht. Abschließend wird auf das gesamte Bein ein spritzfertiger PUR Kunststoff als elastischer Hautüberzug aufgetragen.

Betriebsmodi:

Nachfolgend werden die unterschiedlichen Betriebsmodi beschrieben, um die vielfältigen Anwendungsmöglichkeiten der Erfindung zu offenbaren.

### 1. Interaktiver Betriebsmodus

Im interaktiven Betriebsmodus bewegt der Bediener den Roboter, der also mit dem Bediener interagiert. Der Bediener berührt dazu den Unterschenkel und versucht diesen in die gewünschte Richtung zu bewegen. Die dabei entstehenden Kräfte, Momente und Bewegungen werden gemessen und mittels einer modellbasierten Regelung so weiterverarbeitet, daß sich der Unterschenkel entsprechend seiner biomechanischen Eigenschaften in die gewünschte Richtung bewegt.

### 2. Aktiver Betriebsmodus

Im aktiven Betriebsmodus bewegt sich der Roboter gemäß einer fest vorgegebenen Trajektorie. Der Bediener wird dabei vom Roboter geführt und so mit dem optimalen Bewegungsablauf bestimmter Gelenktests vertraut gemacht. Gleichzeitig können die vom Bediener aufgebrachten Kräfte gemessen, angezeigt und bewertet werden. Da hier der Roboter als Lehrer fungiert wird diese Betriebsart auch Teaching Modus genannt. Die Trajektorien der Gelenktests können aus der Literatur entnommen oder durch berührungslose Bewegungsmessverfahren ermittelt werden.

### 3. Statischer Betriebsmodus

Für bestimmte Anwendungen kann der Kniesimulator auch in einem einfachen statischen Modus betrieben werden, der ganz ohne Roboterbewegungen auskommt. Dabei werden Kräfte und Momente aufgezeichnet, die der Bediener bei der Durchführung beliebiger Aktionen auf den Unterschenkel ausübt. Solche Aktionen können beispielsweise Palpationen, künstliche chirurgische bzw. arthroskopische Eingriffe, Funktionstests bei ruhendem Bein oder Schläge auf den Unterschenkel zur Auslösung des Knie- oder Achillessehnenreflexes sein. Anhand der gemessenen Kraft- und Momentenverläufe können für den Lernprozeß des Bedieners relevante Erkenntnisse gewonnen werden. Die Verläufe können online oder offline mit den Aufzeichnungen anderer Bediener oder des Lehrers verglichen werden. Andererseits können die Kraft- und Momentensignale, bei Überschreitung bestimmter Grenzwerte, auch zur Auslösung bestimmter Ereignisse genutzt werden. Die Auslösung solcher Ereignisse kann dann im aktiven oder interaktiven Modus erfolgen. Dieses Funktionsprinzip wird später am Beispiel des Kniesehnenreflexes noch näher erläutert.

Grafik:

Mit einem Monitor werden interne anatomische Komponenten, wie Knochen, Sehnen, Bänder und Meniskus visualisiert. Optional kann der Monitor zusammen mit einer Schutterbrille auch im Stereomodus betrieben werden. Die Bewegungsanimation erfolgt synchron mit den Bewegungen des haptischen Displays, d. h. des Phantomknies des Gelenksimulators. Der Bediener hat dadurch die Möglichkeit die körperinternen, anatomischen und biomechanischen Zusammenhänge eines gesunden oder verletzten Kniegelenks auch während der Bewegung zu studieren. Die Visualisierung erfolgt auf der Basis segmentierter und 3D-rekonstruierter CT- und MRT-Aufnahmen. Dies verleiht den anatomischen Komponenten ein sehr realistisches Erscheinungsbild.

Beim grafische Rendern werden bewegungssynchrone Lageänderungen der Knochen und Knorpel, Verlaufsänderungen der Bänder und der Kapsel sowie Verformungen von Muskeln, Sehnen und des Meniskus berücksichtigt. Eine Visualisierung solcher Bewegungsvorgänge ist durch so genannte "kinematische CT und MRT Aufnahmen" möglich. Hierbei handelt es sich um eine cinematografische Technik, die keine interaktive Bedienung in mehr als einem Freiheitsgrad zuläßt und daher für eine Anwendung im VR-Bereich ungeeignet ist (Dupuy et al. 1997; Witonski und Goraj 1999). Eine Alternative stellt eine modellbasierte Animation dar. Darin werden alle Komponenten in ihren relevanten geometrischen und viskoelastischen Eigenschaften und ihrem mechanischen Zusammenspiel modelliert. Für eine realitätsnahe Simulation sind aber FE-Rechnungen und komplexe Mehrkörper-Kontaktmodelle notwendig, die den simulationstechnischen Aufwand stark vergrößern.

Zweckmäßig ist daher ein kombiniertes Verfahren, bei dem Bilddaten ebenso wie anatomische Modellbetrachtungen zum Einsatz kommen. Der Ansatz besteht darin Geometriedaten, die aus zahlreichen diskreten Gelenkwinkelstellungen rekonstruiert wurden, so zu inter- und extrapolieren, daß jede beliebige Kniewinkelstellung in jedem wichtigen Freiheitsgrad dargestellt werden kann, s. auch Fig. 4. Die Inter- und Extrapolationen können dabei modellunterstützt erfolgen, indem beispielsweise die Volumenerhaltung der Muskeln sowie die Längenkonstanz der Bänder berücksichtigt wird. Da dies mit verhältnismäßig geringem Rechenaufwand möglich ist, sind echtzeitfähige und glatte Bewegungsabläufe in jeder beliebigen Bewegungsrichtung erreichbar.

Akustik:

Mit dem akustischen Display werden die während der Kniebewegung entstehenden Geräusche wiedergegeben. Dies können sowohl passive Reib- oder Schnappgeräusche sein, die durch die berührenden Gelenkflächen erzeugt werden, als auch Schmerzäußerungen des Patienten, wie z.B. ein Stöhnen oder kurzes Aufschreien.

Verschiedene Gelenkgeräusche wurden von den Erfindern an mehreren Probanden aufgenommen. Akustische Äußerungen, die als Folge von verursachten Schmerzen theoretisch auftreten können, wurden künstlich nachgestellt und ebenso aufgezeichnet. Alle Geräusche wurden klassifiziert und in einer Klangdatenbank zusammengefaßt.

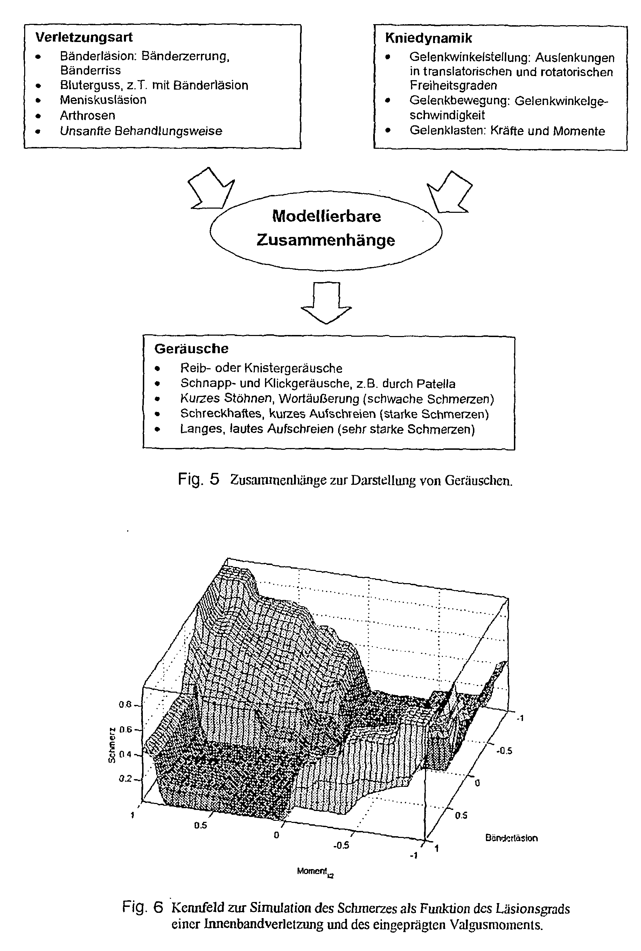

Zur Darstellung von Geräuschen müssen Modelle gefunden werden, die die Art des Geräusches mit der zugrundeliegenden Verletzungsart und der ausgeführten Kniedynamik in Zusammenhang bringen, vergl. auch Schema Fig. 5. Nach Gesprächen mit Ärzten wurden diese Zusammenhänge zunächst mit Hilfe von linguistischen Variablen qualitativ beschrieben. Mit der Methode der Fuzzy-Logik wurden aus den linguistischen Angaben quantitative Zusammenhänge hergeleitet werden. Die Fuzzy-Modelle wurden anhand zweier ausgewählter Beispiele getestet und nachfolgend erläutert.

Im ersten Beispiel wurde ein Zusammenhang zwischen Verletzungsausmaß bei einer Innenbandläsion, eingeprägtem Valgus-/Varusmoment und der resultierenden Schmerzstärke erstellt. Die Fig. 6 zeigt das Kennfeld des Fuzzy-Systems, in dem der Ausgang "Schmerz" (z-Achse) als Funktion des Valgus-/Varusmoments und der Bänderläsionsstärke abgebildet ist. In dem zweiten Beispiel wurden Meniskusverletzungen betrachtet. Dabei wurde der verursachte Schmerz als Funktion der Läsionsstärke und Lokalisation der Meniskusverletzung sowie des Flexionswinkels und des eingeprägten Valgusmoments modelliert.

Technische Anforderungen an den Kniesimulator

Die vom Kniesimulator zu erfüllenden technischen Anforderungen richten sich nach den durchzuführenden klinischen Funktionstests und den dabei auftretenden dynamischen Eigenschaften.

Klinische Funktionstests für das Kniegelenk

In diesem Abschnitt wird ein Überblick über die verschiedenen Gruppen und Untergruppen der klinischen Funktionstests für das Kniegelenk vorgestellt, vergl. auch Tabelle 1.

Verschiedene Tests dienen der Untersuchung der Gelenkstabilität und -beweglichkeit in den drei rotatorischen Freiheitsgraden. Es können Tests in Flexions-/Extensionstests, Innen-/Außenrotationstests und Varus-/Valgustests unterteilt werden. Diese Tests dienen in erster Linie der Diagnose von Läsionen des Kapselbandapparates.

Bei den Schubladentests werden Bewegungen in den translatorischen Freiheitsgraden ausgeführt. Dabei wird der Unterschenkel in anteriore bzw. posteriore Richtung oder in lateraler und medialer Richtung gegenüber dem Oberschenkel verschoben.

Bei den Pivot-Shift-Tests werden Bewegungen in mehreren Freiheitsgraden durchgeführt und gleichzeitig Kräfte in verschiedenen Richtungen eingeleitet.

Eine weitere Gruppe sind die Rotationstests oder Rekurvatum-Tests, bei denen das mechanische Gleichgewicht aller rotatorischen Freiheitsgrade bestimmt wird.

Der Kniesehnenreflextest dient zur Ermittlung motorische und sensorische Störungen.

Die vorstehend beschriebenen Tests sind ausgewählt, um das Verständnis der nachfolgenden Ausführungen zu verbessern.

Insgesamt wurden 86 Tests ermittelt, wobei zur Durchführung einer Knieuntersuchung nicht alle Tests beherrscht werden müssen, da sich viele Tests nur geringfügig in ihren Bewegungsabläufen und den dabei erkennbaren Läsionen unterscheiden. Zur Veranschaulichung ist in der Tabelle 1 die universelle Anwendbarkeit des erfindungsgemäßen Kniesimulators dargestellt.

**Tabelle 1:** Übersicht über existierende und darstellbare funktionelle Knietests.

| Nr. | Funktionstests | | Anzahl gefundener Tests | Mit Kniesimulator darstellbare Tests |
|---|---|---|---|---|
| | Gruppe | Untergruppe | | |
| 1 | Allgemeine Untersuchung | Inspektion | - | N |
| | | Palpation | - | N |
| 2 | Tests in Rotationsrichtung | Extension/Flexion | 4 | A+B (4) |
| | | Innen-/ Außenrotation | 3 | A+B (3) |
| | | Varus/Valgus | 4 | B (4) |
| 3 | Schubladentests | vordere Schubladen | 6 | A (6) |
| | | hintere Schubladen | 7 | A (7) |
| | | seitliche Schubladen | 4 | A (4) |
| 4 | Laclunan-Tests | - | 7 | A (7) |
| 5 | Pivot-Shift-Tests | anteriore Richtung | 13 | B (13) |
| | | posteriore Richtung | 3 | B (3) |
| 6 | Rotationstests | - | 3 | B (3) |
| 7 | Meniskustests | - | 23 | A+B (4), B (12), A(1), N(6) |
| 8 | Widerstandstests | - | 7 | A+B (7), Modellerweiterungen |
| 9 | Reflextests | - | 2 | A+B (2) |
| N: Nicht oder nur bedingt möglich<br>A: Nur mit arretiertem Oberschenkel möglich (siehe Abb. 4.37)<br>B: Nur mit passiv beweglichem Oberschenkel möglich (siehe Abb. 4.37)<br>A+B: In jeder Konfiguration möglich<br>Werte in Klammern geben die Anzahl der jeweils umsetzbaren Tests an. | | | | |

Mit dem Kniesimulator darstellbare Funktionstests

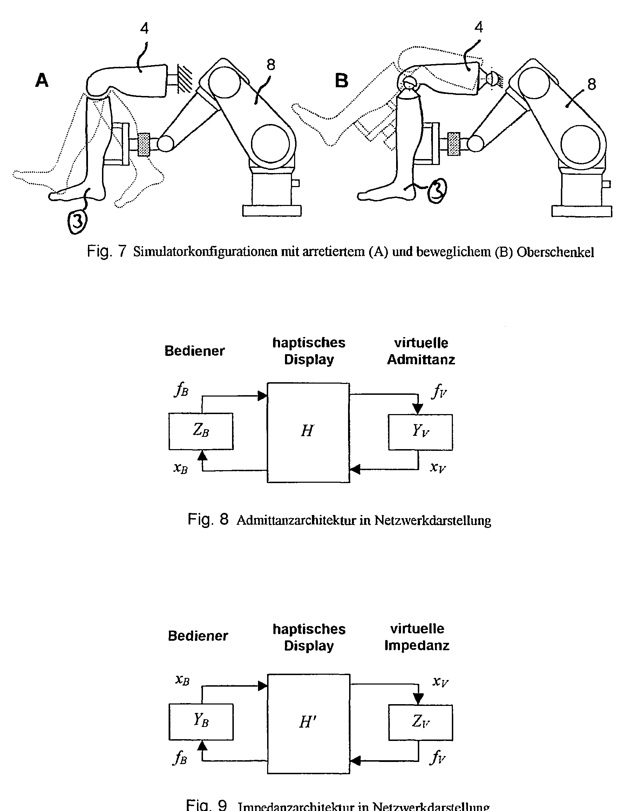

Es ist das generelle Ziel, möglichst viele Funktionstests zu simulieren. Die wesentlichen Beschränkungen bei der Simulation der Tests mit dem Kniegelenksimulator ergeben sich aus der limitierten Anzahl aktiver Freiheitsgrade des Roboters. Während der verwendete Roboter nur sechs aktive Freiheitsgrade besitzt, kann die Bewegung eines Beins, bestehend aus den drei Segmenten Oberschenkel, Unterschenkel und Fuß theoretisch mit 18 Freiheitsgraden beschrieben werden. Diese Zahl läßt sich verringern, wenn bestimmte Freiheitsgrade, die nur kleine Bewegungsausmaße aufweisen oder für die Darstellung der Knietests von geringerer Bedeutung sind, eingefroren werden. Da für die hier vorgestellte Anwendung die Bewegungen des Fußes nicht relevant sind und zudem angenommen wird, daß das Hüftgelenk keine translatorischen Bewegungen ausführt, kann das System auf neun Freiheitsgrade reduziert werden. Weiter verringern läßt sich die Anzahl der Freiheitsgrade durch zusätzliche Einschränkungen der Bewegungsfreiheit des Beins. Ein Teil der Funktionstests kann mit einer vereinfachten Versuchskonfiguration umgesetzt werden, bei der keine Bewegungen des Oberschenkels zulässig sind, dieser also raumfest aber verstellbar arretiert ist (vergl. Fig. 7A). Dabei hat der Unterschenkel gegenüber dem Oberschenkel sechs Freiheitsgrade, und es können sowohl rotatorische Unterschenkelbewegungen als auch translatorische Schubladenbewegungen dargestellt werden. Die meisten übrigen Knietests können simuliert werden, indem die Arretierung gelöst wird und der Oberschenkel an seinen beiden Enden jeweils gelenkig gelagert wird (vergl. Fig. 7B). Hierzu werden drei der sechs Freiheitsgrade des Kniegelenks eingefroren. Vorzugsweise sind dies die drei translatorischen Freiheitsgrade; das Bein eignet sich dann vor allem zur Darstellung makroskopischer Bewegungsabläufe.

Statt die Freiheitsgrade des Versuchsaufbaus auf sechs oder weniger Freiheitsgrade zu reduzieren, bietet sich auch die Alternative, weitere aktive Freiheitsgrade einzuführen, um so eine wirklichkeitsnähere Repräsentation eines menschlichen Beins mit neun oder mehreren Freiheitsgraden zu erhalten. Dies könnte beispielsweise durch einen zweiten Aktuator geschehen, der mit dem künstlichen Oberschenkel verbunden wird.

Prinzipiell lassen sich die Funktionstests sowohl im aktiven als auch im interaktiven Betriebsmodus durchführen. Im interaktiven Modus muß jedoch darauf geachtet werden, daß die vom Oberschenkel auf den Unterschenkel übertragenen Kräfte und Momente vernachlässigbar gering oder bekannt und reproduzierbar sind. Nur so können die Kräfte und Momente zwischen Bediener und Bein eindeutig bestimmt werden, was für eine einwandfreie Regelung und zur Darstellung korrekter biomechanischer Eigenschaften gewährleistet sein muß. Bei der Konfiguration mit arretiertem Oberschenkel stellt dies kein Problem dar, da sich Ober- und Unterschenkel nicht berühren. Bei der Konfiguration mit beweglichem Oberschenkel treten nur geringe Kräfte und Momente auf, die zudem bekannt sind und daher kompensiert werden können.

Dynamische Eigenschaften der Funktionstests

Änderungen der Knieposition und des Kniewinkels können vom Bediener auf näherungsweise einen Millimeter und wenige Grad genau abgeschätzt werden. Feinere Auflösungen sind bei der klinischen Untersuchung von Gelenk-kläsionen auch nicht erforderlich, da erst Abweichungen von mehr als 3 mm als pathologisch gelten.

Die bei der Untersuchung des Beins auftretenden Geschwindigkeiten, variieren von Test zu Test. Schnelle Bewegungen treten beispielsweise beim McMurray-Test auf, der zur Diagnose von Menskusverletzungen durchgeführt wird. Das Kniegelenk erreicht dabei Geschwindigkeiten von etwa 130 °/s.

Auch die Größe der bei den Tests aufgebrachten Untersucherkräfte sind sehr unterschiedlich. Hohe Kräfte treten auf, wenn der untersuchende Arzt zum Zwecke der Durchführung eines Tests das gesamte Bein, also Fuß, Unter- und Oberschenkel, gegen die Schwerkraft halten muß. Typische Werte dafür sind 100 - 150 N. Ähnlich hohe Kräfte, jedoch in horizontaler Richtung, werden bei den Schubladentests aufgebracht. Die dabei wirkenden Drehmomente hängen natürlich von den betrachteten Hebelarmen ab. Das bei einem Schubladentest auf das Kniegelenk wirkende Moment beträgt näherungsweise 10-15 Nm, wenn ein typischer Hebelarm von 10 cm angenommen wird.

Die hohen Steifigkeiten, die das menschliche Kniegelenk in bestimmten Bewegungsrichtungen besitzt, müssen vom Roboter möglichst überboten werden, damit sich die Nachgiebigkeit des Roboters nicht zu störend auf die Position und Orientierung des Endeffektors auswirken.

Neben den charakteristischen kinematischen und kinetischen Werten, die bei der Durchführung von Funktionstests auftreten, muß auch das dynamische Verhalten des Kniegelenks für die Auslegung des Aktuators berücksichtigt werden. Aus diesem Grund wurde auf der Basis des vorgestellten biomechanischen Modells die Systemdynamik des Kniegelenks untersucht. Nach der Linearisierung um mehrere ausgewählte Gelenk-winkelstellungen wurden die Eigenfrequenzen bestimmter Bewegungsrichtungen erfaßt. In Flexions/Extensions- und Valgus-/Varusrichtung liegen die Eigenfrequenzen unterhalb von 1,5 Hz. In anteriorer/posteriorer Richtung nimmt die Eigenfrequenz infolge der hohen Steifigkeiten einen deutlich größeren Wert von 11 - 19 Hz an.

**Tabelle 2:** Realisierbarkeit der technischen Anforderungen

|  | Reale Knieeigenschaften | Aktuator (Stäubli R-X90)* |
|---|---|---|
| Positionsgenauigkeit Winkelgenauigkeit | ≈ 1 mm <br> ≈ 1° | $\pm$ 0,02 mm Wiederholgenauigkeit <br><br> < 0,0028° |
| Geschwindigkeiten | < 250 °/s bei Pendelbewegung | < 286°/s |
| Kräfte Momente | < 150 N <br> < 15 Nm | < 120 N <br> < 10 Nm |
| Steifigkeiten | translatorisch: < 200 N/mm <br> rotatorisch: < 16 Nm/° | < 150 N/mm |
| Dynamische Eigenschaften | Eigenfrequenzen: < 19 Hz <br> Schnappeffekte: > 10 Hz <br> Vibrationseffekte: < 50 Hz | Abtastrate: 4 kHz (62,5 Hz)# <br> mechanische Bandbreite: 10-20Hz |
| * Die technischen Daten stellen die Maximalwerte des schwächsten Gelenks bzw. für die jeweils ungünstigste Konstellation dar. Es sind folglich häufig auch höhere Werte reallsierbar. <br> # Der niedrige Wert gilt nur für die Originalsteuerung. | | |

Mit dem Aktuator darstellbare dynamische Eigenschaften:

Die Voraussetzung für eine wirklichkeitsnahe Simulation ist, daß die beschriebenen dynamischen Knieeigenschaften vom Aktuator auch dargestellt werden können. Die Knieeigenschaften bestimmen daher die technischen Anforderungen, denen der Aktuator genügen muß. Je besser der Aktuator den Anforderungen entspricht, desto wirklichkeitsnäher sind die dargestellten Knieeigenschaften.

Zur Realisierung des haptischen Displays wurde der Stäubli Roboter RX90 gewählt. Wegen der hohen Positionsgenauigkeit und den hohen erreichbaren Geschwindigkeiten von 283 °/s (im langsamsten Gelenk) werden die kinematischen Anforderungen gut erfüllt. Die vom Roboter generierbaren Kräfte und Momente befinden sich ebenso im geforderten Wertebereich (siehe Tabelle 2). Der gewählte JR3 Kraft-Momenten-Sensor kann mit seinem Meßbereich von $\pm 200$ N in den translatorischen und $\pm 20$ Nm in den rotatorischen Freiheitsgraden die auftretenden Lasten erfassen. Der Roboter weist eine hohe Steifigkeit auf Für die translatorischen Freiheitsgrade wurde das Steifigkeitsverhalten des Roboters experimentell ermittelt. Die Steifigkeit im Bereich des Endeffektors beträgt je nach Auslenkungsrichtung 150 - 200 N/mm und befindet sich damit in der selben Größenordnung wie die Steifigkeit des menschlichen Kniegelenks.

Bei regelungstechnischen Problemstellungen wird eine Abtastfrequenz empfohlen, die das 15 bis 50-fache der darzustellenden Bandbreite beträgt. Bei dieser Anwendung würde sich daher eine Abtastrate von etwa 750 - 2500 Hz ergeben. Ähnlich hohe Werte von mindestens 1 kHz werden auch bei anderen Anwendungen für die Abtastung haptischer Displays empfohlen. Der originale Steuerrechner des Roboters erfüllt diese Anforderung nicht, da er verhältnismäßig lange Zykluszeiten von 16 ms benötigt, was einer Abtastrate von 62,5 Hz entspricht. Mit einer neu aufgebauten PC basierten Ansteuerung wird die Rate jedoch auf 4 kHz erhöht.

Aktiver und interaktiver Modus: Regelungsstrategien

Regelung haptischer Displays

Grundsätzlich treffen alle Probleme der Kraftregelung von mechanischen Aktuatoren (Colgate und Hogan 1989; Eppinger und Seering 1987; Townsend und Salisbury 1989) auch auf den Kniegelenksimulator (haptisches Display) zu, wobei bei der vorliegenden Erfindung noch zusätzlich der mit dem Aktuator (Roboter) interagierende Mensch in den Regelkreis eingeschlossen ist. Dies stellt eine besondere regelungstechnische Herausforderung dar, weil die mechanischen Eigenschaften stark variieren können und das Verhalten des Bedieners im Allgemeinen nicht vorhersehbar ist. Der Fachmann erhält dazu weitere Hinweise aus den Veröffentlichungen von Kazerooni und Her 1994; Brown und Colgate 1997; Clover 1999; Hannaford und Adams 1999; Carignan und Cleary 2000, die Methoden zur Regelung und Stabilisierung solcher Mensch-Machine-Interaktionen untersucht haben.

Die Funktion eines mechanischen Systems läßt sich durch den Zusammenhang zwischen Kraft $f(t)$ und Bewegung $x(t)$ darstellen. Dieser wird als mechanische Impedanz Z definiert, wenn die Bewegung als eingeprägte Größe wirkt. Besitzt ein Körper beispielsweise eine hohe mechanische Impedanz, so bedeutet dies, daß eine große Kraft aufgebracht werden muß, um den Körper entgegen seinen elastischen, dämpfenden und/oder trägen Widerstand zu bewegen. Der inverse Zusammenhang mit der Kraft als Eingangsgröße wird als Admittanz Y bezeichnet:

$$f(t) = Z(x(t)), \quad x(t) = Y(f(t))$$

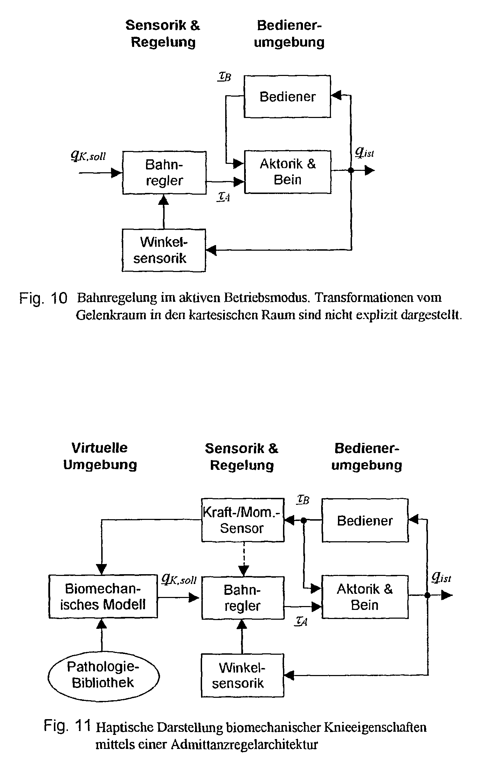

Die Darstellung einer haptischen Interaktion kann über eine Admittanz- oder Impedanzarchitektur erfolgen. Die Fig. 8 und 9 zeigen in Netzwerkdarstellung, wie dabei die virtuell darzustellenden Admittanz $Y_V$ bzw. Impedanz $Z_V$ über das haptische Display $H$, repräsentiert als Zweitor, mit dem Bediener B in Beziehung steht. Bei der Admittanzarchitektur wird mittels einer virtuellen Admittanz $Y_V$ aus einer gemessenen, vom Bediener vorgegebenen Kraft ($f_V = F_B$) die entsprechende Bewegung $x_V$ ermittelt (Fig. 8). Die Aufgabe des haptischen Displays ist es, diese Bewegung $x_V$ so exakt wie möglich auf den Bediener abzubilden. Der Bediener reagiert über die Impedanz $Z_B$ des interagierenden Körperteils (z.B. seine Hand oder sein Arm) auf die aufgeprägte Bewegung $x_B$ mit einer angemessenen Kraftantwort $f_B$.

Entsprechend invertiert sind die Zusammenhänge bei der Impedanzarchitektur (Fig. 9). Als Konsequenz des Ein- und Ausgangsverhaltens des haptischen Displays folgt aus den oben genannten Darlegungen, daß das haptische Display im Falle der Admittanzarchitektur positionskommandiert und im Falle der Impedanzarchitektur kraftkommandiert ist.

Ziel des haptischen Displays ist es, dem Bediener die gleichen Kraft- und Bewegungseindrücke zu vermitteln, wie sie an der darzustellenden Admittanz bzw. Impedanz erfahren werden sollen. Im Idealfall (Tranparenz) gilt demnach:

$$x_B = x_V, \quad f_B = f_V$$

Da jedoch jedes haptische Display aufgrund seiner Massen und Reibung eine eigene Dynamik besitzt, muß schließlich durch eine entsprechende unterlagerte Kraft- und Positionsregelung im haptischen Display versucht werden, Transparenz auch unter nicht-idealen Randbedingungen zu erzielen. Erschwerend hierbei ist, daß alle drei Komponenten, d.h. die darzustellende virtuelle Admittanz bzw. Impedanz, das haptische Display und der Bediener im allgemeinen nichtlineare Eigenschaften aufweisen.

Beide Regelungsarchitekturen setzen voraus, daß die virtuell dargestellte Admittanz bzw. Impedanz explizit beschrieben werden kann. Eine Admittanzregelung erweist sich dann als günstig, wenn große Impedanzen $Z_V$ oder mechanische Zwangsbedingungen (z.B. eine virtuelle Wand, d.h. $Z_V \rightarrow \infty$ bzw. $Y_V = 0$) vermittelt werden sollen. In diesem Fall wird die Dynamik des gemessenen Kraftsignals durch die Tiefpaß-Eigenschaft der darzustellenden Admittanz stark reduziert, so daß die unterlagerte Bahnregelung nur geringen Positionsänderungen zu folgen hat. Sensorrauschen (Kraftsensor) wirkt sich folglich nur sehr gering auf die Bahnregelung aus. Umgekehrt eignet sich die Impedanzregelung vor allem zur Darstellung kleiner Impedanzen $Z_V$ und ist daher für Durchführung freier Bewegungen ($Z_V = 0$) prädestiniert.

Mit diesen Ausführungen wird dem Fachmann vermittelt, daß die mechanische Bandbreite eines haptischen Displays nicht nur von den Eigenschaften der verwendeten technischen Komponenten, wie Leistung der Antriebe oder Gewicht der bewegten Bauteile abhängt, sondern auch von der Bedienerimpedanz beeinflußt wird. Sie hängt davon ab, wie und mit welchen Körpersegmenten der Bediener mit dem haptischen Display verbunden ist, welche passiven, anthropometrischen Eigenschaften die entsprechenden Segmente besitzen und welches Verhalten der Bediener ausübt, d.h. ob er "wohlwollend" passiv, "aggressiv" aktiv oder "hartnäckig" steif agiert.

Aktiver Modus (Teaching Modus)

Im aktiven Betriebsmodus folgt das Phantomknie des Gelenksimulators einer vorgegebenen Solltrajektorie, die dem Bewegungsablauf eines typischen Gelenkfuntionstests entspricht. Gemessene Bewegungsdaten des Kniegelenks wurden offline aufbereitet und stehen als Sollpositionsverläufe $q_{K,soll}(t)$ einer klassischen Bahnregelung zur Verfügung, wie in Fig. 10 dargestellt. Die beim Berühren des Beinsegments vom Bediener auf den Roboter ausgeübten Kräfte werden als Störgrößen vom Bahnregler kompensiert.

Interaktiver Modus

In diesem Betriebsmodus hat der Bediener die Möglichkeit die Bewegungen des Roboters zu beeinflussen bzw. vorzugeben. Dabei arbeitet der Roboter als haptisches Display, dessen Aufgabe es ist, die mechanischen Eigenschaften des virtuellen Objekts darzustellen. Die regelungstechnische Umsetzung erfolgt dabei auf der Basis zweier unterschiedlicher Architekturen, der Admittanz- oder Impedanzarchitektur.

Die Admittanzregelung läßt sich aus einer Erweiterung der Bahnregelarchitektur (Fig. 10) herleiten. Die zwischen Bediener und Roboter wirkenden Lasten $\underline{\tau}_B$ werden mit einem Kraft-Momenten-Sensor erfaßt. In einem biomechanischen Kniemodell wird dann die aus der aktuellen Lastsituation $\underline{\tau}_B$ resultierende Kniebewegung berechnet und dem Bahnregler als Sollbewegung $q_{K,soll}$ zugeführt (Fig. 11). Der Bahnregler erzeugt schließlich die entsprechenden Aktormomente $\underline{\tau}_A$, die den Roboter antreiben. Zur Verbesserung des Regelverhaltens können die gemessenen Bedienerkräfte im Bahnregelalgorithmus als Störgrößenaufschaltung berücksichtigt werden (Fig. 11, gestrichelter Pfeil). Es steht eine Bibliothek verschiedener Parametersets zur Verfügung, die eine Simulation von Kniegelenken mit verschiedenen gesunden oder pathologischen Eigenschaften ermöglicht.

Dem biomechanischen Modell des Kniegelenks liegt die Bewegungsgleichung

$$M(\underline{q}_K)\underline{\ddot{q}}_K + \underline{G}(\underline{q}_K) + \underline{D}(\underline{\dot{q}}_K) + \underline{E}(\underline{q}_K) = \underline{Q}_B$$

zugrunde. Die Gleichung beschreibt die Kniebewegung, die bei Berührung des Unterschenkels durch den Bediener resultiert, wobei diese Zusammenhänge nachfolgend noch näher erläutert werden. Zur Beschreibung der Admittanz muß diese Bewegungsgleichung nach der Bewegungsgröße $q_K$ aufgelöst werden. Für eine korrekte Einbindung des Kniemodells in die Reglerarchitektur müssen die notwendigen Koordinatentransformationen zwischen kartesischem Raum, Kniesystem und Robotergelenkraum durchgeführt werden. So ergeben sich die generalisierten Knielasten $\underline{Q}_B$ aus einer Transformation der Bedienerkräfte und Bedienermomente $\underline{\tau}_B$ vom kartesischen Raum in das Kniesystem. Die in der Bewegungsgleichung berechneten Kniekoordinaten $\underline{q}_K$ werden als $q_{K,soll}$ an den Bahnregler weitergegeben, wo sie schließlich in den Robotergelenkraum transformiert werden.

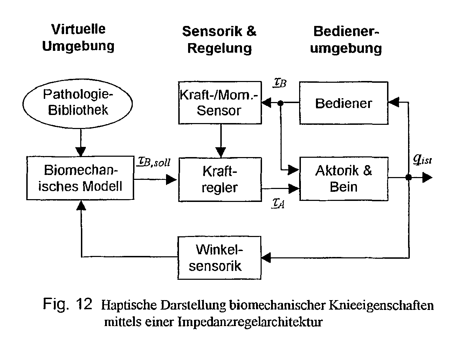

Alternativ kann auch eine Impedanzregelung verwendet werden, die im Gegensatz zur positionskommandierten Admittanzregelung durch eine Kraftkommandierung gekennzeichnet ist. Das Prinzip der Impedanzregelung ist aus dem gemessenen Bewegungs- bzw. Winkelsignal die zugrundeliegenden Bedienerkräfte und -momente $\underline{\tau}_{B,soll}$ zu berechnen und einem Kraftregelalgorithmus zuzuführen (Fig. 12). Die biomechanische Bewegungsgleichung muß dazu entsprechend umgeformt werden. Kniegelenkgeschwindigkeiten und -beschleunigungen können durch numerische Ableitung des gemessenen und in das Kniesystem transformierten Winkelsignals bestimmt werden. Ist das Winkelsignal zu sehr rauschbehaftet, so können diese Werte auch mittels Gyroskop- und Accelerometersensoren gewonnen werden. Der Kraftregelalgorithmus bewirkt, daß die berechneten Interaktionskräfte zwischen Roboter und Bediener mit möglichst geringem Fehler umgesetzt werden.

Wie bereits dargelegt, erweist sich eine Admittanzregelung dann als günstig, wenn große Impedanzen, z.B. in Form mechanischer Zwangsbedingungen, vermittelt werden sollen. Umgekehrt eignet sich die Impedanzregelung vor allem zur Darstellung kleiner Impedanzen, z.B. in Form freier Bewegungen. Da bei der Simulation von Körpergelenkbewegungen die Impedanzen nie Null werden, am Rande des Getenkwinkelbereiches sogar sehr hohe Werte annehmen können, wird in der hier vorgestellten Anwendung eine Admittanzregelung bevorzugt.

Nachfolgend wird der statische Modus am Beispiel des Kniesehnenreftexes beschrieben:

Durch einen Schlag auf die Patellarsehne unterhalb der Kniescheibe wird der Kniesehnenreflex ausgelöst. Dabei erzeugt die Patellarsehne eine Zugkraft, die zur Dehnung des Oberschenkelmuskels und somit eine Streckung des Beins hervorruft. Das Bewegungsausmaß des freihängenden Unterschenkels wird zur Beurteilung neurologischer Funktionen herangezogen und hängt zum Einen von der vorliegenden Pathologie und individuellen Reizschwelle und zum Anderen von Betrag und Ort der z.B. mit dem Hammer applizierten Schlagkraft ab.

Mit dem hier vorgestellten Kniesimulator kann auch ein virtueller Kniesehnenreflex dargestellt werden. Dazu wird überprüft, ob die mit dem Kraft-Momentensensor gemessenen Kontaktkraft den Bedingungen genügt, die zur Auslösung eines Reflexes notwendig sind. Erst wenn diese erfüllt sind, wird nach Einhaltung einer kurzen Latenzzeit von 55 ms ein kurzzeitiges, reflextypisches Extensionsmoment von 5 Nm erzeugt, das den Unterschenkel aus seiner Ruhelage auslenkt. Unmittelbar danach führt der Unterschenkel eine gedämpfte Schwingung um seine Ruhelage aus, sofern der Bediener die Bewegung nicht durch Berührung des Unterschenkels beeinflußt. Damit ein Reflex ausgelöst wird, müssen der Betrag der Kontaktkraft $\underline{F}$ und ihr Gradient jeweils einen Mindestwert übersteigen, d.h.

$$|\underline{F}| > 10\ \text{N} \quad \text{und} \quad \frac{d|\underline{F}|}{dt} > 200\ \text{N/s}.$$

Ferner muß sichergestellt sein, daß der Berührpunkt im Bereich der Kniesehne liegt. Daher muß für den Kontaktwinkel $\alpha$ und den Abstand $|\underline{B}|$ des Kontaktpunkts vom Kniezentrum die Beziehung

$$|\alpha| < 20° \quad \text{und} \quad 0,02\ \text{m} < |\underline{B}| < 0,05\ \text{m}$$

gelten.

Der Erfolg des Tests kann entweder grafisch veranschaulicht oder durch eine Bewegung des künstlichen Unterschenkels bestätigt werden. Für letztere Version muß natürlich vom statischen in den aktiven oder interaktiven Betriebsmodus umgeschaltet werden.

Unter der Annahme, daß die Krafteinleitung mit dem Reflexhammer momentenfrei erfolgt, wird der exakte Auftreffpunkt ausschließlich aus den mit dem Kraft-Momenten-Sensor aufgezeichneten Reaktionslasten berechnet. Es ist besonders zu erwähnen, daß daher keine Kraft- oder Drucksensorik im Bereich des Auftreffpunkts im Phantombein vorgesehen werden muß.

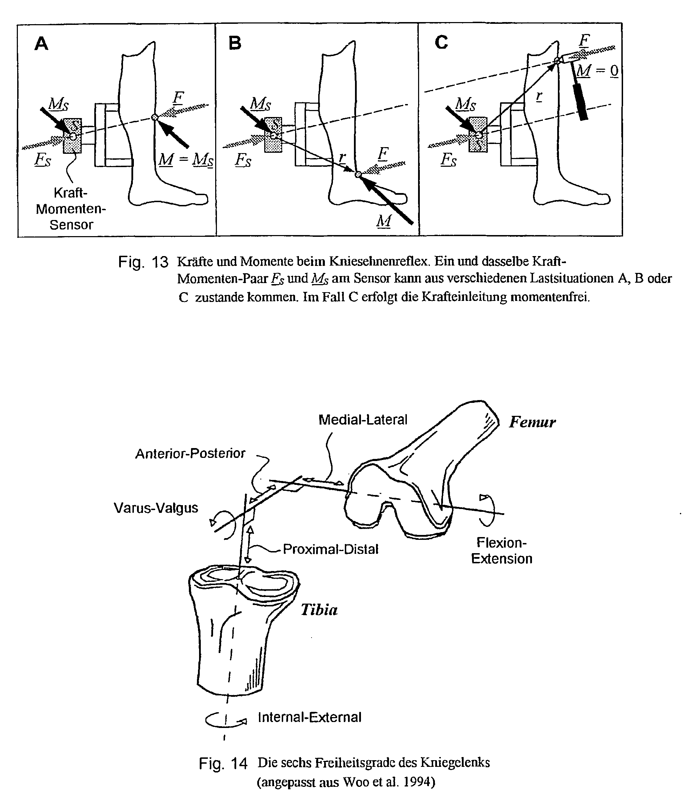

Die Fig. 13 zeigt, daß ein gemessenes Kraft-Momenten-Paar $\underline{F}_S$ und $\underline{M}_S$ theoretisch aus verschiedenen Lastsituationen am Bein zustande kommen kann. Für jede Situation gelten die statischen Gleichgewichtsbedingungen

$$\underline{F}_s = \underline{F} \quad \text{und} \quad \underline{M}_s = \underline{M} + \underline{r} \times \underline{F}$$

mit den unbekannten eingeprägten Lasten $\underline{F}$ und $\underline{M}$ Der Vektor $\underline{r}$ repräsentiert den gesuchten Ort der Krafteinleitung im Sensorkoordinatensystem mit Ursprung $S$. Bei einem Schlag mit einem spitzen Hammer kann angenommen werden, daß die Lasten momentenfrei eingeleitet werden, d.h. $\underline{M} = \underline{0}$. Es folgt dann

$$M_S = \underline{r} \times \underline{F}_S = \begin{pmatrix} r_x \\ r_y \\ r_z \end{pmatrix} \times \begin{pmatrix} f_{Sx} \\ f_{Sy} \\ f_{Sz} \end{pmatrix} = \begin{pmatrix} m_{Sx} \\ m_{Sy} \\ m_{Sz} \end{pmatrix},$$

wobei die Komponenten der Vektoren $\underline{F}_S$ und $\underline{M}_S$ bekannt sind. Daraus folgt das Gleichungssystem

$$\begin{cases} r_y f_{Sz} - r_z f_{Sy} = m_{Sx} \\ r_z f_{Sx} - r_x f_{Sz} = m_{Sy} \\ r_x f_{Sy} - r_y f_{Sx} = m_{Sz} \end{cases}$$

mit den Unbekannten $\underline{r} = (r_x, r_y, r_z)^\mathsf{T}$. Beim Versuch nach $\underline{r}$ aufzulösen, wird festgestellt, daß das Gleichungssystem unterbestimmt ist, da die Determinante stets Null ist:

$$\begin{vmatrix} 0 & f_{Sz} & -f_{Sy} \\ -f_{Sz} & 0 & f_{Sx} \\ f_{Sy} & -f_{Sx} & 0 \end{vmatrix} = 0$$

Anschaulich, bedeutet dies, daß der Ort der Krafteinleitung im Raum nicht exakt bestimmbar ist. Stattdessen kann nur die Lage der Wirkungslinie der eingeprägten Kraft $\underline{F}$ ermittelt werden. Diese liegt in der Ebene $E$, die sich orthogonal zu $\underline{M}_S$ mit $S \in E$ befindet und kann als Parameterfunktion

$$g_S(\lambda) \equiv \underline{r}^* + \lambda \underline{F} = \underline{r}^* + \lambda \underline{F}_S$$

im Sensorkoordinatensystem dargestellt werden, wobei $\underline{r}^*$ ein beliebiger Vektor zwischen Ursprung $S$ und Wirkungslinie ist, z.B.

$$\underline{r}^* = \frac{|\underline{M}_S|}{|\underline{F}_S|} \frac{\underline{F}_S \times \underline{M}_S}{|\underline{F}_S \times \underline{M}_S|}.$$

Da die Oberfläche des berührten Objekts (d.h. des Unterschenkels) bekannt ist, kann letztendlich der Punkt der Krafteinleitung aus den Schnittpunkten der Wirkungslinie mit der Oberfläche bestimmt werden. Der Auftreffpunkt des Hammers ist derjenige Schnittpunkt, bei dem die Kraft in den Körper hinein gerichtet ist.

Zur Implementierung des Kniesehnenreflexes im Kniesimulator ist es nicht notwendig die Kontaktpunlctkoordinaten analytisch zu bestimmen. Es reicht eine einfache Abfrage aus, ob die richtige Stelle getroffen wurde oder nicht. Dazu wird überprüft, ob die gemessenen Reaktionslasten innerhalb eines definierten, empirisch ermittelten Wertebereichs liegen, die für einen "Treffer" repräsentativ sind. Diese Vereinfachung ist zulässig, weil aus den bisherigen Darlegungen bekannt ist, daß eine eindeutige Zuordnung zwischen Reaktionslast und Treffpunkt möglich ist. Wie oben erwähnt, sind die Voraussetzungen hierfür, daß eine momentenfreie, unidirektionale Krafteinleitung erfolgt und der Unterschenkel nur an einer Stelle von einer Wirkungslinie durchdrungen wird.

Implementierung

Bahnregler

Wie in der Robotik üblich, erfolgt die Bahnregelung mit der Unterstützung eines so genannten "Computed Torque" Ansatzes. Um den Einfluß der unerwünschten dynamischen Eigenschaften des haptischen Displays zu minimieren werden dabei die für die aktuelle Position und Bewegung des Roboters notwendigen Motordrehmomente mittels eines im Rahmen dieses Projektes erstellten identifizierten, dynamischen Robotermodells linearisiert. Die aus Modellvereinfachungen/-ungenauigkeiten und Störungen resultierende Restdynamik wird schließlich mit einem PD-Regler kompensiert.

Das Robotermodell berücksichtigt Gelenkreibungs- und Masseneigenschaften. Die Roboterparameter (Massen, Schwerpunktlagen, Reibungskoeffizienten) wurden mittels Frequenzgangmessungen an den einzelnen Gelenken identifiziert. Obwohl die Deviationsterme der Massenträgheitsmomente sowie die Corioliseffekte des Roboters zunächst vernachlässigt wurden, lieferte diese vereinfachte Modellversion bereits eine zufriedenstellende Regelgüte.

PC-basierte Steuerung

Das haptische Display wurde mittels des sechsachsigen Stäubli Industrieroboters RX90 verifiziert. Der originale Steuerrechner des Roboters benötigt verhältnismäßig lange Zykluszeiten von mehr als 16 ms. Für einen stabilen Betrieb des haptischen Displays und eine störungsfreie und wirklichkeitsnahe Darstellung biomechanischer Gelenkeigenschaften sind hohe Abtastraten im kHz-Bereich unter Echtzeitbedingungen und einer hohen Rechenleistung zur Implementierung der modellbasierten Regelungsverfahren notwendig. Aus diesem Grund wurde parallel eine PC basierte Ansteuerung aufgebaut. Über einen Umschalter können Winkelsensor-, Kraft-/Momentensensor und die Analogsignale für die Gelenkverstärker vom Stäubli-Rechner auf den PC umgeschaltet werden, wo eine Signalerfassung/-ausgabe durch entsprechende PCI-Karten erfolgt. Durch Konfiguration der Gelenkverstärker auf eine Stromregelung kann so auf dem PC die oben beschriebene, auf Gelenkmomentenschnittstellen beruhende Regelung implementiert werden. Aufgrund der wesentlich höheren Rechenleistung des PCs kam damit die Abtastzeit auf 250 $\mu$s verkürzt werden, was zu wesentlich besseren Ergebnissen als mit der Original-Architektur führt. Vorteilhaft bei diesem Vorgehen ist, daß alle anderen Original-Komponenten wie die Gelenkverstärker, die Sicherheitselektronik für Bremsen und den Nothaltkreis sowie die Stromversorgung erhalten bleiben und weiterhin verwendet werden können.

Biomechanisches Modell des Kniegelenks

Bewegungsdynamik des Unterschenkels

Die vom Bediener eingeprägten Kontaktkräfte $\underline{F}$ bewirken eine Bewegung des berührten Objekts. Die Bewegung des Unterschenkels wird durch die Bewegungsgleichung

$$M(\underline{q}_K)\ddot{\underline{q}}_K + \underline{G}(\underline{q}_K) + \underline{D}(\dot{\underline{q}}_K) + \underline{E}(\underline{q}_K) = \underline{Q}_B$$

beschrieben, wobei $\underline{q}_K$ der Vektor der generalisierten Kniekoordinaten $\underline{q}_K = (x_{ant}, x_{med}, x_{prox}, \varphi_{flex}, \varphi_{val}, \varphi_{arot})^T$ ist, der die Raumposition und -orientierung des Unterschenkels beschreibt. Dabei sind $x_{ant}$, $x_{med}$ und $x_{prox}$ die translatorischen Verschiebungen in anteriorer, medialer und proximaler Richtung sowie $\varphi_{flex}$, $\varphi_{val}$ und $\varphi_{arot}$ die Verdrehungen in Knieflexion, Valgusrotation und Außenrotation (Fig. 14). $M$ ist die Trägheitsmatrix des Unterschenkels mit Fuß. $G$ bezeichnet die auftretenden Gravitationsmomente. Dämpfende und elastische Momentenbeiträge im Knie werden durch die beiden Terme $\underline{D}$ und $\underline{E}$ beschrieben. $\underline{Q}_B$ sind die generalisierten Lasten. Der Einfluß aktiver Muskelkräfte wird in der Bewegungsgleichung nicht berücksichtigt. Da es sich bei der hier betrachteten Anordnung um ein Einfachpendel handelt, treten keine Corioliterme auf. Die Bewegungsgleichungen werden mit einem impliziten Euler-Integrationsverfahren gelöst.

Die vom Bediener auf das Kniegelenk eingeprägten Kräfte $\underline{F}$ gehen über den Term der generalisierten Lasten $\underline{Q}_B = (F_{ant}, F_{med}, F_{prox}, M_{flex}, M_{val}, M_{arot})^T$ in die Bewegungsgleichung ein. Die Komponenten von $\underline{Q}_B$ werden aus den Komponenten des 6-Komponenten-Kraftsensors ermittelt.

Die für die Bewegungsgleichung benötigten Massenparameter des Pendels, bestehend aus Unterschenkel und Fuß, können mit den Regressionsgleichungen von Zatsiorsky und Seluyanov (1983) als Funktion der Körpergröße und des Körpergewichts des zu simulierenden Patienten abgeschätzt werden. Die in diesem Beispiel verwendeten Massen- und Geometrieparameter sind in Tabelle 3 zusammengestellt.

**Tabelle 3** Massen- und Geometrieparameter des Unterschenkels (mit Fuß)

| Masse | Hauptträgheitsmomente | | | Schwerpunktabstand vom Kniegelenkzen trum |
|---|---|---|---|---|
| $m$/kg | $J_{flex}$ /kgm$^2$ | $J_{val}$/kgm$^2$ | $J_{arot}$ /kgm$^2$ | $l_{COG}$ /m |
| 4,3 | 0,40 | 0,40 | 0,02 | 0,25 |

Die Bewegung des Unterschenkels findet vorrangig in Flexions-/Extensionsrichtung statt, jedoch müssen für eine physiologisch korrekte Modellierung auch die übrigen translatorischen und rotatorischen Freiheitsgrade berücksichtigt werden (Fig. 14). Zudem können bei einem verletzten Knie die Bewegungsausmaße in bestimmten Freiheitsgraden deutlich stärker ausgeprägt sein als im gesunden Fall. Die Auslenkung des Unterschenkels erfolgt in allen sechs Freiheitsgraden durch die vom Bediener eingeprägte Kraft $\underline{F}$.

Viskoelastische Knieeigenschaften

Das Kniegelenk ist von Bändern, Sehnen, Kapselgewebe und anderen anatomischen Strukturen umgeben. Diese Komponenten äußern sich bei Bewegung des Unterschenkels in Form eines passiven, viskoelastischen Widerstands, der in allen Freiheitsgraden mehr oder minder stark in Erscheinung tritt. In der Bewegungsgleichung

$$M(\underline{q}_K)\ddot{\underline{q}}_K + \underline{G}(\underline{q}_K) + \underline{D}(\dot{\underline{q}}_K) + \underline{E}(\underline{q}_K) = \underline{Q}_B$$

 werden diese Effekte durch den elastischen, positionsabhängigen Term $E$ und den dämpfenden, geschwindigkeitsabhängigen Term $D$ berücksichtigt.

Nach Markolf et al. (1976) kann die elastische Kennlinie für einen Bewegungsfreiheitsgrad (z.B. Valgusmoment als Funktion des Valguswinkels) anhand von vier charakteristischen Parametern beschrieben werden. Diese sind die Steifigkeiten im rechtsseitigen, mittleren und linksseitigen Bereich der Kennlinie ($c_r$, $c_m$ bzw. $c_l$), sowie die Breite des mittleren Bereichs ($q_m$). Der mittlere Bereich kennzeichnet sich häufig durch eine verhältnismäßig geringe Steifigkeit bzw. hohe Laxität (Nachgiebigkeit).

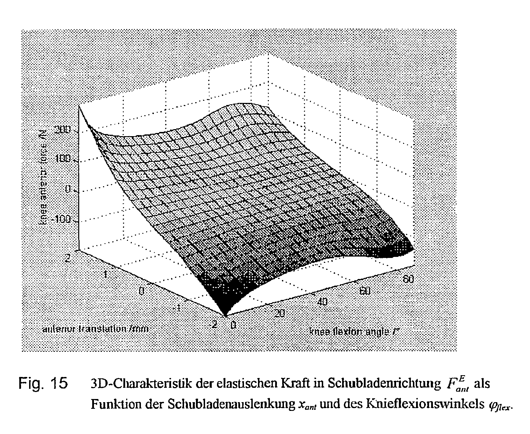

Jeder Freiheitsgrad wird isoliert betrachtet und durch eine einfache $M$-$\varphi$- bzw. $F$-$x$-Kennlinie beschrieben. Bedingt durch den komplizierten Aufbau des Kniegelenks bestehen aber auch Abhängigkeiten von den anderen Freiheitsgraden. Beispielsweise besitzt die elastische Kennlinie in anteriorer/posteriorer Richtung ("Schubladenrichtung") einen deutlich steileren Verlauf bei gestrecktem Knie als bei gebeugtem Knie (siehe Tabelle 4 und Fig. 15).

Markolf et al. (1976) bestimmten die elastischen Kennlinien für die Freiheitsgrade in anteriorer/posteriorer Richtung, Außen-/ Innenrotation und Valgus-/Varusrotation an 35 präparierten Leichenknien. Für jeden Freiheitsgrad führten sie die Messungen bei mehreren diskreten Flexionswinkeln durch und identifizierten jeweils ein Set der vier charakteristischen Parameter. Tabelle 4 zeigt das Ergebnis der Messungen in anteriorer/posteriorer Richtung. Erkennbar sind die erhöhten Steifigkeitswerte bei gestrecktem Knie.

**Tabelle 4** Charakteristische Parameter zur Beschreibung der elastischen Kennlinie in anteriorer/posteriorer Richtung (Markolf et al. 1976)

| Knieflexionwinkel | $q_m$ in mm | $c_m$ in N/mm | $c_l$ (posterior) in N/mm | $c_r$ (anterior) in N/mm |
|---|---|---|---|---|
| 0° | 2,0 ($\pm$0,5) | 65 ($\pm$76) | 195 ($\pm$220) | 118 ($\pm$70) |
| 20° | 4,8 ($\pm$2,0) | 9,2 ($\pm$6,2) | 224 ($\pm$370) | 66 ($\pm$25) |
| 45° | 3,9 ($\pm$2,5) | 23 ($\pm$25) | 148 ($\pm$165) | 78 ($\pm$40) |
| 90° | 2,9 ($\pm$1,7) | 37 ($\pm$23) | 99 ($\pm$129) | 143 ($\pm$157) |

Damit die Daten im Kniesimulator verwendet werden können, müssen aus den diskreten Parameterwerten kontinuierliche Verläufe geschaffen werden. Daher wurde eine stetig differenzierbare Funktion hergeleitet, die den angenommenen (realen) Kennlinienverlauf durch stückweise Polynomfunktionen darstellt:

$$E(q) = \begin{cases} c_l q + \frac{1}{2}(c_l - c_m)q_m & \text{falls} \quad q \le -\frac{3}{4}q_m & \text{(Bereich I)} \\[2mm] c_m q + \frac{16}{27}\dfrac{c_l - c_m}{q_m^2}q^3 & \text{falls} \quad -\frac{3}{4}q_m < q \le 0 & \text{(Bereich II)} \\[2mm] c_m q + \frac{16}{27}\dfrac{c_r - c_m}{q_m^2}q^3 & \text{falls} \quad 0 < q \le \frac{3}{4}q_m & \text{(Bereich III)} \\[2mm] c_r q - \frac{1}{2}(c_r - c_m)q_m & \text{falls} \quad q > \frac{3}{4}q_m & \text{(Bereich IV)} \end{cases}$$

Die Variable $q$ repräsentiert dabei einen der fünf Freiheitsgrade $x_{ant}$, $x_{med}$, $x_{prox}$, $\varphi_{val}$ oder $\varphi_{arot}$. Entsprechend stellt $E(q)$ eine der fünf elastischen Komponenten $F_{ant}^E(x_{ant})$, $F_{med}^E(x_{med})$, $F_{prox}^E(x_{prox})$, $M_{val}^E(\varphi_{val})$ oder $M_{arot}^E(\varphi_{arot})$ dar.

Diese Gleichung kann dahingehend erweitert werden, daß auch die relevante Abhängigkeit vom Flexionswinkel des Knies berücksichtigt wird. Die vier charakteristischen Parameter werden hierzu als nichtlineare Funktionen des Knieflexionswinkels $\varphi_{flex}$ modelliert:

$$c_l = c_l(\varphi_{flex}); \quad c_m = c_m(\varphi_{flex}); \quad c_r = c_r(\varphi_{flex}); \quad q_m = q_m(\varphi_{flex}).$$

**Tabelle 5** Parameterfunktionen zur Berücksichtigung des Einflusses der Kniebeugung

| | $q_m$ in ° | $c_m$ in Nm/° | $c_i$ in Nm/° | $c_r$ in Nm/° |
|---|---|---|---|---|
| **Außen-/ Innenrotation** | 26,4 - 80/($\varphi_{flex}$ +4,9) | 0,1 + 0,6/($\varphi_{flex}$+1) | 2,58 (innen) | 2,42 (außen) |
| **Valgus/Varus** | 2.94 + 0,0896 $\varphi_{flex}$ - 0,0003757 $\varphi_{flex}^2$ | 0,7 + 10,3/($\varphi_{flex}$+1) | 13,3 (varus) | 16,06-0,0711 $\varphi_{flex}$ + 0,00019 $\varphi_{flex}^2$ |
| | $q_m$ in mm | $c_m$ in N/mm | $c_i$ in N/mm | $c_r$ in N/mm |
| **Anterior/posterior** | 2,0 + 0,259 $\varphi_{flex}$ - 0,00688 $\varphi_{flex}^2$ + 0,0000456 $\varphi_{flex}^3$ | 65 - 1,002 $\varphi_{flex}$+ 0,005526 $\varphi_{flex}^2$ | 216 - 1,274 $\varphi_{flex}$ (posterior) | 112-2,279 $\varphi_{flex}$+ 0,0292 $\varphi_{flex}^2$ (anterior) |
| **Medial/lateral** | 5,0 | 12,0 | 84 + 0,4 $\varphi_{flex}$ (lateral) | 140 - 0,7 $\varphi_{flex}$ + 0,0025 $\varphi_{flex}^2$ |
| **Proximal/distal** | 0 | 0 | 20,0 (distal) | 200,0 (proximal) |
| Anmerkungen: Flexionswinkel $\varphi_{flex}$ in Grad; Gültigkeit der Gleichungen nur für $\varphi_{flex} > 0$ | | | | |

Die Tabelle 5 zeigt die vier Parameterfunktionen für die fünf modellierten Freiheitsgrade. Die Parameterfunktionen für die Außen-/Innenrotation, Valgus-/Varusrotation und anteriore/posteriore Schublade wurden auf der Grundlage der Meßergebnisse von Markolf et al. (1976) hergeleitet. Zur Bestimmung der Parameterfunktionen in medialer/lateraler Richtung wurden Daten von Piziali et al. (1980) herangezogen. In proximaler Richtung waren keine experimentellen Daten aus der Literatur verfügbar. Dieser Verlauf wurde durch eine stückweise lineare Funktion geschätzt, die in proximaler Richtung eine deutlich höhere Steifigkeit aufweist als in distaler Richtung und unabhängig vom Knieflexionswinkel ist.

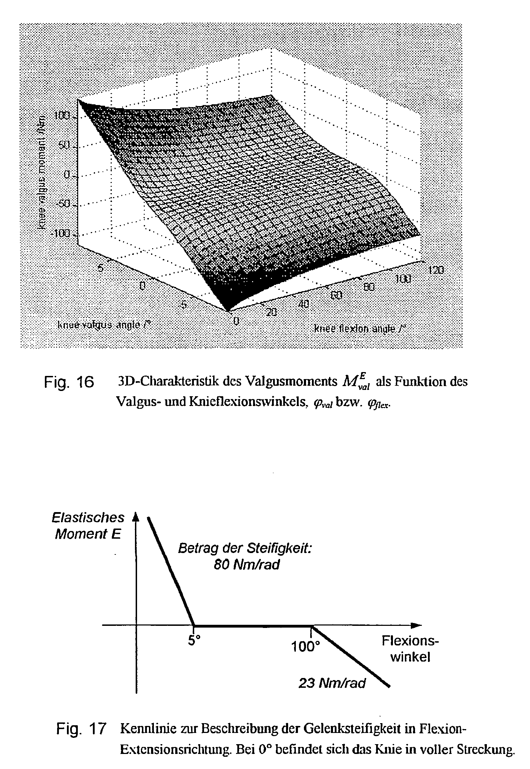

Die Figuren 15 und 16 zeigen Ergebnisse der modellierten elastischen Kennlinien in anteriorer/posteriorer und valgus/varus Richtung.

Zur Beschreibung der elastischen Kennlinie im verbleibenden Flexions-/Extensions-Freiheitsgrad wurde ein Modell von Riener und Edrich (1999) verwendet. In Anlehnung an andere Arbeiten (Audu und Davy 1985; Mansour und Audu 1986) wird darin das passive elastische Moment $M_{flex}^{E}$ als Exponentialfunktion

$$M_{flex}^{E}(\varphi_{flex}) = \exp(\,1.800 - 0.0352\,\varphi_{flex} - 0.0460\,\varphi_{F} + 0.0217\,\varphi_{H})$$

$$- \exp(-3.971 + 0.0495\,\varphi_{flex} - 0.0004\,\varphi_{F} - 0.0128\,\varphi_{H})$$

$$+ \exp(\,2.220 - 0.150\,\varphi_{flex}) - 4.820$$

beschrieben. Wegen der Existenz von Zweigelenkmuskeln hängt die Steifigkeit in Knieflexionsrichtung von den Stellungen der Nachbargelenke ab. In der Gleichung tauchen daher auch der Plantarflexionswinkel $\varphi_F$ und der Hüftflexionswinkel $\varphi_H$ auf Der letzte Exponentialterm repräsentiert den Einfluß des Kapselbandapparats des Kniegelenks und ist daher von den Winkelstellungen $\varphi_H$ und $\varphi_F$ unabhängig. Alle Winkelangaben erfolgen in Grad. Bei einer Sitzhaltung mit konstantem Fuß- und Hüftwinkel kann die Gleichung entsprechend vereinfacht werden.

Infolge dissipativer Effekte in den getenkumspannenden Strukturen treten neben den elastischen Eigenschaften auch dämpfende, so genannte viskose Eigenschaften auf. Diese können für jeden einzelnen Freiheitsgrad jeweils durch einen einfachen linearen Zusammenhang repräsentiert werden. Experimentelle Daten für den Freiheitsgrad in Extensions/Flexionsrichtung können am einfachsten durch passive Pendelfallversuche ermittelt werden (Riener et al. 1996). Der Dämpfungskoeffizient in dieser Richtung beträgt $b_{flex} \approx 1{,}0$ Nms/rad $\approx 0{,}018$ Nms/° (Riener und Fuhr 1998). Für die übrigen Freiheitsgrade konnten keine experimentellen Daten in der Literatur gefunden werden. Da jedoch der dissipative Einfluß der anatomischen Komponenten in den anderen Bewegungsrichtungen vergleichbar ist, kann dieser Wert näherungsweise auf die übrigen beiden rotatorischen Freiheitsgraden übertragen werden. Auch in den translatorischen Richtungen sind keine Werte verfügbar. Sie müssen daher geschätzt werden. Vorteilhaft erweist sich die Tatsache, daß Abweichungen des Dämpfungskoefizienten vom realen Wert infolge der geringen Bewegungsausmaße und -geschwindigkeiten in diesen Richtungen für den Bediener kaum spürbar sind.

Darstellung von Gelenkläsionen

Zur Darstellung von Gelenkverletzungen oder -erkrankungen müssen die verwendeten Parameter und Parameterfunktionen an die veränderten elastischen Gelenkeigenschaften angepaßt werden. Dies ist in vielen Fällen jedoch schwierig, da sich lokal veränderte anatomische Strukturen global in mehreren Freiheitsgraden auswirken können. Entsprechend aufwendig kann sich daher die Anpassung des Modells gestalten. Ist die Veränderung einzelner Parameter nicht ausreichend, so müssen ganze Parameterfunktionen ausgetauscht werden.

Die Modellanpassungen zur Darstellung eines vorderen Kreuzbandrisses sind jedoch übersichtlicher. Eine solche Verletzung äußert sich vor allem dadurch, daß sich die Steifigkeit in anteriorer Richtung (vordere Schublade) verringert. Im Modell kann dies durch eine Herabskalierung der rechtsseitigen und mittleren Steifigkeiten $c_r$ und $c_m$ (anteriore Richtung) und eine Erhöhung des Bereichs $q_m$ berücksichtigt werden (Markolf et al. 1976). Die linksseitige Steifigkeit bleibt dagegen unverändert, da ein gerissenes vorderes Kreuzband die Stabilität in posteriorer Richtung nicht wesentlich beeinflußt. Die Skalierungsfaktoren, die zur Anpassung der Parameterfunktionen von $F_{ant}^{E}(x_{ant})$ an einen vorderen Kreuzbandriß verwendet werden können, sind in Tabelle 6 aufgelistet. Sie wurden aus experimentellen Daten von Markolf et al. (1976) hergeleitet.

Tabelle 6 Skalierungsfaktoren für die Parameterfunktionen in anteriorer/posteriorer Richtung zur Simulation eines vorderen Kreuzbandrisses.

| $q_m$ (verletzt)/$q_m$ (normal) | $C_m$ (verletzt)/$C_m$ (normal) | $c_t$ (verletzt)/$c_t$ (normal) | $c_r$ (verletzt)/$c_r$ (normal) |
|---|---|---|---|
| 1,91 | 0,61 | 1,00 (posterior) | 0,43 (anterior) |

Vereinfachtes viskoelastisches Kniemodell

Der biomechanische Modellansatz wurde bereits ausführlich beschrieben. Bewegungsgleichungen, viskoelastisches Modell und das Modell des Kniesehnenreflexes können vollständig übernommen werden. Für Testzwecke und zur Demonstration des interaktiven Betriebsmodus wurde ein stark vereinfachtes biomechanisches Kniemodell mit sechs Freiheitsgraden entwickelt und in eine Admittanzregeiarchitektur integriert. Die Unterschenkelmasse wurde auf Null gesetzt, so daß Trägheits- und Gravitationseffekte unberücksichtigt bleiben können ($M = 0$; $G = 0$). Die viskosen und elastischen Eigenschaften wurden als linear angenommen und aus dem bereits vorgestellten Kniemodell abgeleitet. Demnach besitzt das Kniegelenk eine niedrige Impedanz in Flexionsrichtung, und eine hohe Impedanz in den anderen Freiheitsgraden (Tabelle 7). Zur Darstellung des natürlichen Knieanschlags, bei starker Extension und Flexion wurde die Steifigkeit in dieser Richtung durch eine stückweise stetige Kennlinie angenähert (Fig. 17).

**Tabelle 7** Viskoelastische Kniegelenkparameter

| Bewegungsrichtung | Betrag der Steifigkeit | Dämpfung |
|---|---|---|
| **translatorisch** | | |
| anterior-posterior | 100.000 N/m | 200 Ns/m |
| medial-lateral | 60.000 N/m | 200 Ns/m |
| proximal-distal | 100.000 N/m | 200 Ns/m |
| **rotatorisch** | | |
| Flexion-Extension | 80/0/23 Nm/rad | 1,0 Nms/rad |
| Valgus-Varus | 688 Nm/rad | 2,0 Nms/rad |
| Innen-/Außenrotation | 143 Nm/rad | 2,0 Nms/rad |

Mit diesem Modellansatz lassen sich je nach Parameterwahl verschiedene Kneeigenschaften simulieren und somit ein gesundes oder verletztes Gelenk darstellen. Der Bediener kann dann verschiedene Testbewegungen, wie z.B. einen "Vorderen Schubladentest" oder eine "Hyperextensionsbewegung" durchführen und dabei die simulierte Verletzung diagnostizieren.

Zusammenfassende Erläuterung der Vorteile der Erfindung:

Der Gelenksimulator mit dem interaktiven Phantomknie bietet dem Bediener, die Möglichkeit mit einer künstlichen Repräsentation eines menschlichen Gelenks zu interagieren. Neu an dem Ansatz hier ist, daß eine realitätsnahe Simulation von Berührungseindrücken ermöglicht wird, wie sie bei der unmittelbaren Abtastung und Bewegung von Körperteilen mit den Händen und Fingern entstehen. Das im interaktiven Modus verwendete Kniemodell zeichnet sich durch seine einfache mathematische Darstellungsweise aus, die sich auf die Beschreibung des Eingangs-Ausgangs-Verhaltens der viskoelastischen Eigenschaften beschränkt.

Die theoretischen Ausführungen zum Bau eines Kniegelenksimulators befähigen den Fachmann, Gelenksimulatoren für andere Körperabschnitte zu entwickeln, ohne daß dazu eine erfinderische Tätigkeit erforderlich ist.

**Patentansprüche**

1. Programmierbarer Gelenksimulator mit Kraft- und Bewegungsfeedback zum Nachbilden veränderbarer biomechanischer Eigenschaften menschlicher und tierischer Körperabschnitte mit Gelenken, wobei der Gelenksimulator nachfolgende Merkmale auf weist:

   - einen Modellkörper (3, 4), der im wesentlichen die Form und Härteeigenschaften des zu simulierenden Körperabschnitts aufweist
   - steuerbare Antriebselemente (8), die mit dem Modellkörper (3, 4) mechanisch so gekoppelt sind, daß durch Ansteuerung der Antriebselemente Bewegungen des Modellkörpers (3, 4) bewirkbar sind, die den realen biomechanischen Gelenkbewegungen des zu simulierenden Körperabschnitts entsprechen,
   - eine Sensoranordnung (7) zum Detektieren von Kräften und Bewegungen, die durch eine untersuchende Person auf den Modellkörper (3, 4) aufgebracht werden, wobei die Sensoren der Sensoranordnung (7) in der kinematischen Kette zwischen dem Modellkörper (3, 4) und den Antriebselementen (8) und/oder an den Antriebselementen (8) selbst angeordnet sind und
   - eine programmierbare, einen Rechner aufweisende Steuervorrichtung zum Ansteuern der Antriebselemente (8), wobei die Steuervorrichtung so ausgebildet ist, daß die von der Sensoranordnung (7) bereitgestellten Meßsignale dem Rechner zugeführt werden, in welchem ein Simulationsprogramm abgelegt ist, welches im Zusammenwirken mit der Steuervorrichtung veranlaßt, daß der Modellkörper **(3, 4)** bei äußerer Krafteinwirkung mittels der Antriebselemente **(8)** so bewegt wird, daß die biomechanischen Gelenkeigenschaften des natürlichen Körperabschnitts simuliert und von der untersuchenden Person als biomechanische Eigenschaft des betreffenden natürlichen Körperabschnitts empfunden werden.

**2.** Gelenksimulator nach Anspruch 1, **dadurch gekennzeichnet, daß** eine mit der Steuervorrichtung signaltechnisch verbundene optische Displayvorrichtung **(10)** vorgesehen ist, die der untersuchenden Person **(1)** während der Tätigkeit am Modellkörper **(3, 4)** eine visuelle Darstellung eines betreffenden natürlichen Körperabschnitts zeigt.

**3.** Gelenksimulator nach Anspruch 2, **dadurch gekennzeichnet, daß** die optische Displayvorrichtung **(10)** Hinweise und Zusatzinformationen anzeigt.

**4.** Gelenksimulator nach einem der vorhergehenden Ansprüche, **dadurch gekennzeichnet, daß** ein mit der Steuervorrichtung signaltechnisch verbundene Schallerzeuger **(11, 12)** zur Erzeugung von typischen Geräuschen vorgesehen ist, die bei der Untersuchung des betreffenden natürlichen Körperabschnitts auftreten würden.

**5.** Gelenksimulator nach Anspruch 4, **dadurch gekennzeichnet, daß** die Schallerzeuger **(24)** in dem Modellkörper **(3, 4)** integriert sind.

**Claims**

**1.** Programmable joint simulator with force and movement feedback for simulating changeable bio-mechanical properties of portions of human and animal bodies, wherein the joint simulator comprises the following features:

- a model body **(3, 4)** substantially having the shape and the hardness properties of the body portion to be simulated,
- controllable driving elements **(8)** mechanically connected to the model body **(3, 4)**, which, when driven, cause the model body **(3, 4)** to carry out movements corresponding to the bio-mechanical movements of the joint of that body portion to be simulated,
- a sensor arrangement **(7)** for detecting forces and movements applied to the model body **(3, 4)** by an examining individual **(1)**, wherein the sensors of the sensor arrangement **(7)** are positioned in the train between the model body **(3, 4)** and the driving elements **(8)** and/or on the driving elements themselves, and
- a programmable control device for driving the driving elements **(8)**, which comprises a computer having a simulation programme stored in it and is configured so that the measured signals supplied by the sensor arrangement **(7)** are sent to the computer, wherein, when external forces are applied to the model body **(3, 4)**, the control device, in cooperation with the simulation programme, causes the driving elements **(8)** to move the model body **(3, 4)** so that the bio-mechanical properties of the joint of the portion of a natural body are simulated and felt as bio-mechanical properties of the corresponding portion of that natural body by the examining individual **(1)**.

**2.** Joint simulator according to claim 1,
**characterized in that** an optical display unit **(10)** is provided, which is connected to the control device via a signalling link and serves to figure visually the corresponding portion of a natural body to the examining individual **(1)** when he/she carries out operations on the model body **(3, 4)**.

**3.** Joint simulator according to claim 2,
**characterized in that** the optical display device **(10)** gives advises and additional information.

**4.** Joint simulator according to one of the preceding claims,
**characterized in that** a sound generator **(11, 12)** is provided, which is connected to the control device via a signalling link and serves to generate sounds like those which would occur when a certain portion of a natural body is examined.

**5.** Joint simulator according to claim 4,
**characterized in that** the sound generators **(24)** are integrated in the model body **(3, 4)**.

**Revendications**

1. Simulateur d'articulation programmable avec retour de force et de mouvement pour imiter des propriétés biomécaniques modifiées de segments corporels humains ou animaux, le simulateur d'articulation présentant les caractéristiques suivantes :

   - un modèle (3, 4) qui présente essentiellement la forme et les propriétés de dureté du segment à simuler
   - des éléments moteurs commandables (8) qui sont couplés mécaniquement au modèle (3,4) de telle sorte que, par commande des éléments moteurs, des mouvements du modèle (3, 4) puissent être générés, qui correspondent aux mouvements articulaires biomécaniques réels du segment corporel à simuler,
   - un dispositif de capteurs (7) pour détecter les forces et les mouvements, qui sont placés par une personne effectuant l'examen sur le modèle (3, 4), les capteurs du dispositif de capteurs (7) étant disposés dans la chaîne cinématique entre le modèle (3, 4) et les éléments moteurs (8) et/ou sur les éléments moteurs (8) eux-mêmes, et
   - un dispositif de commande programmable, présentant une unité centrale de traitement pour commander les éléments moteurs (8), le dispositif de commande étant conçu de telle sorte que les signaux de mesure proposés par le dispositif de capteur (7) soient acheminés à l'unité centrale de traitement dans laquelle le programme de simulation est enregistré, qui permet, en coopération avec le dispositif de commande, que le modèle (3, 4) soit mu par l'action d'une force externe au moyen des éléments moteurs (8) de telle sorte que les propriétés biomécaniques du segment corporel naturel soient simulées et soient considérées par la personne effectuant l'examen, comme une propriété biomécanique du segment corporel naturel concerné.

2. Simulateur articulaire selon la revendication 1, **caractérisé en ce qu'**un dispositif d'affichage (10) optique lié techniquement par un signal au dispositif de commande est prévu, qui présente à la personne qui effectue l'examen (1) pendant le fonctionnement sur le modèle (3, 4), une représentation visuelle du segment corporel naturel concerné.

3. Simulateur articulaire selon la revendication 2, **caractérisé en ce que** le dispositif d'affichage optique (10) présente des indications et des informations supplémentaires.

4. Simulateur articulaire selon l'une quelconque des revendications précédentes, **caractérisé en ce qu'**un générateur sonique (11, 12) lié techniquement par un signal au dispositif de commande est prévu pour produire les bruits typiques qui surviendraient lors de l'examen du segment corporel naturel concerné.

5. Simulateur articulaire selon la revendication 4, **caractérisé en ce que** les générateurs soniques (24) sont intégrés dans le modèle (3, 4).

EP 1 402 503 B1

Fig. 1a

Fig. 1 b

**Fig. 1 c**

**Fig. 1 d**

Linearantrieb

**Fig. 1 e**

**Fig. 1 f**

Aktuator

4

Aktivierungssignal, z. B. Motorstrom, Öl-/Luftdruck, usw.

Gemessenes Bewegungssignal, z. B. Gelenkwinkel, -geschw., -beschl.

Gemessenes Gelenkdrehmoment (in Streck-/Beugerichtung)

7

Bewegung nur in
Beuge-/Streckrichtung

3

**Fig. 1 g**

Aktuator für
Streckung/Beugung

Aktuator für Innen-/
Außenrotation

Sensor zur Messung
der Momente in den
verwirklichten
Bewegungsrichuntgen

4

7

3

3

Aktuator für
Abduktion/Adduktion

4

7

3

4

Aktuator für Innen-/
Außenrotation

7

3

4

7

3

**Fig. 1 h**

7

3

**Fig. 1 i**

Einkomponenten-
Kraftsensor

Translatorischer
Aktuator (Linearantrieb)

Passives Gelenk
(Scharniergelenk)

4

Aktivierungssignal, z. B. Motorstrom, Öl-/Luftdruck, usw.

Gemessenes Bewegungssignal (Position, Geschwind., Beschl.)

Gemessene Kraft

Bewegung nur in
Beuge-/Streckrichtung

3

**Fig. 1 j**

**Zwei rotatorische Freiheitsgrade**

Kardanaulhängung
(z. B. zwei
Scharniergelenke)

4

3

**Drei rotatorische Freiheitsgrade**

Aufhängung mittels
Kugelgelenk

4

3

**Fig. 1 k**

rotatorischer Antrieb

**Fig. 1 l**

**Fig. 1 m**

Fig. 2

dünne
Schaumstoffschicht

harter Schaumstoff aus Zellpolyethylen

weicher Schaumstoff aus Polyurethan

elastische Haut aus
spritzfertigem PUR

harter
Kunststoffknochen

Roboterbefestigung

Fig. 3   Aufbau des künstlichen Unterschenkels

| MRT-Rekonstruktion bei $\varphi_{flex}$ = 90° | Interpolation für 90° < $\varphi_{flex}$ < 135° | MRT-Rekonstruktion bei $\varphi_{flex}$ = 135° |

Fig. 4   Interpolation rekonstruierter Bilddaten zur Ermöglichung eines interaktiven
(d.h. mit Haptik synchronisierten) und flüssigen Bewegungsablaufs

**Verletzungsart**

- Bänderläsion: Bänderzerrung, Bänderriss
- Bluterguss, z.T. mit Bänderläsion
- Meniskusläsion
- Arthrosen
- *Unsanfte Behandlungsweise*

**Kniedynamik**

- Gelenkwinkelstellung: Auslenkungen in translatorischen und rotatorischen Freiheitsgraden
- Gelenkbewegung: Gelenkwinkelgeschwindigkeit
- Gelenklasten: Kräfte und Momente

**Modellierbare Zusammenhänge**

**Geräusche**

- Reib- oder Knistergeräusche
- Schnapp- und Klickgeräusche, z.B. durch Patella
- *Kurzes Stöhnen, Wortäußerung (schwache Schmerzen)*
- *Schreckhaftes, kurzes Aufschreien (starke Schmerzen)*
- *Langes, lautes Aufschreien (sehr starke Schmerzen)*

Fig. 5 Zusammenhänge zur Darstellung von Geräuschen.

Fig. 6 Kennfeld zur Simulation des Schmerzes als Funktion des Läsionsgrads einer Innenbandverletzung und des eingeprägten Valgusmoments.

34

Fig. 7 Simulatorkonfigurationen mit arretiertem (A) und beweglichem (B) Oberschenkel

Fig. 8 Admittanzarchitektur in Netzwerkdarstellung

Fig. 9 Impedanzarchitektur in Netzwerkdarstellung

**Sensorik &
Regelung**

**Bedienerumgebung**

$\tau_B$

Bediener

$q_{K,soll}$

Bahnregler

Aktorik &
Bein

$q_{ist}$

$\tau_A$

Winkelsensorik

Fig. 10 Bahnregelung im aktiven Betriebsmodus. Transformationen vom
Gelenkraum in den kartesischen Raum sind nicht explizit dargestellt.

**Virtuelle
Umgebung**

**Sensorik &
Regelung**

**Bedienerumgebung**

$\tau_B$

Kraft-/Mom.-
Sensor

Bediener

Biomechanisches Modell

$q_{K,soll}$

Bahnregler

Aktorik &
Bein

$q_{ist}$

$\tau_A$

Pathologie-
Bibliothek

Winkelsensorik

Fig. 11 Haptische Darstellung biomechanischer Knieeigenschaften
mittels einer Admittanzregelarchitektur

**Virtuelle Umgebung**     **Sensorik & Regelung**     **Bediener- umgebung**

Fig. 12  Haptische Darstellung biomechanischer Knieeigenschaften mittels einer Impedanzregelarchitektur

**Fig. 13** Kräfte und Momente beim Kniesehnenreflex. Ein und dasselbe Kraft-Momenten-Paar $F_S$ und $M_S$ am Sensor kann aus verschiedenen Lastsituationen A, B oder C zustande kommen. Im Fall C erfolgt die Krafteinleitung momentenfrei.

**Fig. 14** Die sechs Freiheitsgrade des Kniegelenks
(angepasst aus Woo et al. 1994)

Fig. 15    3D-Charakteristik der elastischen Kraft in Schubladenrichtung $F_{ant}^{E}$ als
Funktion der Schubladenauslenkung $x_{ant}$ und des Knieflexionswinkels $\varphi_{flex}$.

Fig. 16    3D-Charakteristik des Valgusmoments $M_{val}^E$ als Funktion des
Valgus- und Knieflexionswinkels, $\varphi_{val}$ bzw. $\varphi_{flex}$.

Fig. 17    Kennlinie zur Beschreibung der Gelenksteifigkeit in Flexion-
Extensionsrichtung. Bei 0° befindet sich das Knie in voller Streckung.

# EP 1 402 503 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6161080 A
- US 4773865 A
- US 4804328 A
- US 4349339 A
- US 4488433 A
- US 4001951 A
- US 4867686 A
- US 4481001 A
- US 5518407 A
- US 4000564 A
- US 6191798 B
- US 5454722 A
- US 5769640 A
- US 5394766 A
- WO 560440 A
- US 4235025 A
- US 5184319 A
- US 5631861 A
- US 4596528 A
- US 4802858 A
- US 4850877 A
- WO 9628800 A
- US 4601665 A
- US 6126450 A
- US 5870842 A
- US 5791907 A
- US 4605373 A
- US 5576727 A
- US 4350490 A
- US 3895451 A
- US 5967790 A
- JP 10373847 A
- EP 987667 A
- US 4411629 A
- US 4276032 A
- JP 6239420 B

**In der Beschreibung aufgeführte Nicht-Patentliteratur**

- **BAILLOT, Y. ; ROLLAND, J. P. ; LIN K.-C. ; WRIGHT, D. L.** Automatic modeling of knee-joint motion for the virtual reality dynamic anatomy (VRDA) tool. *Precence,* 2000, vol. 9, 223-235
- **BAUR, C. ; GUZZONI, D. ; GEORG, O.** VIRGY: A virtual reality and force feedback based endoscopic surgery simulator. *Stud. Health Technol. Inform.,* 1998, vol. 50, 110-116
- **BLACKWELL, M. ; MORGAN, F. ; DIGIOIA, A. M.** Augmented reality and its future in orthopaedics. *Clinical Orthopaedics and Related Research,* 1998, vol. 354, 111-122
- **BURDEA, G. ; PATOUNAKIS, G. ; POPESCU, V. ; WEISS, R.** VR-based training for diagnosis of prostate cancer. *IEEE Trans. Biomed. Eng.,* 1999, vol. 46, 1253-1260
- **DANG, T. ; ANNASWAMY, T. M. ; SRINIVASAN, M. A.** Development and evaluation of an epidural injection simulator with force feedback for medical training. *Stud. Health Technol. Inform.,* 2001, vol. 81, 97-102
- **DELP, S. L. ; LOAN, P. ; BASDOGAN, C. ; ROSEN, J. M.** Surgical simulation: an emerging technology for training in emergency medicine. *Presence,* 1997, vol. 6, 147-159
- **EDWARDS, P. J. ; KING, A. P. ; HAWKES, D. J. et al.** Stereo augmented reality in the surgical microscope. *Stud. Health. Technol. Inform.,* 1999, vol. 62, 102-108
- **GARG, A. ; WALKER, P. S.** Prediction of total knee motion using a three-dimensional computer-graphics model. *J. Biomechanics,* 1990, vol. 23, 48-58
- **HÖHNE, K.-H.** VOXEL-MAN 3D-Navigator. CD-ROM/Diskette. Springer-Verlag, 2000
- **HOWE, R. D. ; PEINE, W. J. ; KONTARINIS, D. A ; SON, J. S.** Remote palpation technology for surgical applications. *IEEE Engineering in Medicine and Biology Magazine,* 1995, vol. 14, 318-323
- **KEEVE, E. ; KIKINIS, R.** Biomechanics-based simulation of knee dynamics. *Proc. of the IEEE-EMBS conference,* 1999, 558
- **KLING-PETERSEN, T. ; RYDMARK, M.** Modeling and modification of medical 3D objects. The benefit of using a haptic modeling tool. *Proc. of the Medicine Meets Virtual Reality Conference,* 2000, 162-167
- **KÜHNAPFEL, U. ; KÜHN, C. ; HÜBNER, M. ; KRUMM, H. G. ; MAAß, H. ; NEISIUS, B.** The Karlsruhe endoscopic surgery trainer as an example for virtual reality in medical education. *Minimally Invasive Therapy and Allied Technologies,* 1997, vol. 6, 122-125

- **LANGRANA, N. A. ; BURDEA, G. ; LANGE, K. ; GOMEZ, D. ; DESHPANDE, S.** Dynamic force feedback in a virtual knee palpation. *Artificial Intelligence in Medicine,* 1994, vol. 6, 321-333
- **MÜLLER, W. ; BOCKHOLT, U.** The virtual reality arthroscopy training simulator. *Stud. Health Technol. Inform.,* 1998, vol. 50, 13-19
- **PAULOS, L. E. ; CAWLEY, P. W.** Impact biomechanics of lateral knee bracing. The anterior cruciate ligament. *The American Journal of Sports Medicine,* 1991, vol. 19, 337-342
- **PIEPER, S. ; DELP, S. ; ROSEN, J. ; FISHER, S.** A virtual environment system for simulation of leg surgery. *Proc. Stereoscopic Display and Applications,* 1991, vol. II, 188-196
- **RIENER, R. ; BURGKART, R.** A survey study for the development of virtual reality technologies in orthopedics. *9th Annual Medicine Meets Virtual Reality (MMVR) Conference,* 2001
- **ROLLAND, J. P. ; FUCHS, H.** Optical versus video see-through head-mounted displays in medical visualization. *Presence,* 2000, vol. 9, 287-309
- **RUDMAN, D. T. ; STREDNEY, D. ; SESSANNA, D. ; YAGEL, R. ; CRAWFIS, R. ; HESKAMP D. ; EDMOND, C. V. ; WIET, G. J.** Functional endoscopic sinus surgery training simulator. *Laryngoscope,* 1998, vol. 108, 1643-1647
- **SMITH, S. ; WAN, A. ; TAFFINDER, N. ; READ, S. ; EMERY, R. ; DARZI, A.** Early experience and validation work with Precedicus VA - the Prosolva virtual reality shoulder arthroscopy trainer. *Stud. Health Technol. Inform.,* 1999, vol. 62, 337-343
- **SZEKELY, G. ; SCHWEITZER, G. et al.** Virtual reality based surgery simulation for endoscopic gynaecology. *Stud. Health Technol. Inform.,* 1999, vol. 62, 351-357
- **TANG, S. L. ; KWOH, C.K. ; TEO, M. Y. ; SING, N. W. ; LING, K. V.** Augmented reality systems for medical applications. *IEEE Engineering in Medicine and Biology Magazine,* 1998, vol. 17, 49-58
- **TENDICK, F. ; DOWNES, M. ; GOKTEKIN, T. ; CAVUSOGLU, M. C. ; FEYGIN, D. ; WU, X. ; EYAL, R. ; HEGARTY, M. ; WAY, L. W.** A virtual environment testbed for training laparoscopic surgical skills. *Presence,* 2000, vol. 9, 236-255
- **VÖLTER, S. ; KRÄMER, K.-L. ; NIETHARD, F. U. ; EWERBECK, V.** Virtual Reality in der Orthopädie: Prinzipien, Möglichkeiten und Perspektiven. *Z. Orthop.,* 1995, vol. 133, 492-500
- **WARD, J. W. ; WILLS, D. P. ; SHERMAN, K. P. ; MOHSON, A. M.** The development of an arthroscopic surgical simulator with haptic feedback. *Future Generation Computer Systems Journal,* 1998, vol. 14, 243-251
- **AOUNI-ALESHIAN G. H. ; BLANKEVOORT, L. ; KWAK, S. D. ; MOW, V. C.** *Three dimensional multibody modelling of anatomical joints,* 2000
- **BALDWIN, J. F.** *Training mannequin,* 1988
- **BARRABEE, K. P.** *Interactive audio-visual teaching method and device,* 1989
- **DANIEL, R. P.** *Force-indicating dummy legs,* 1982
- **DENTON, R. A. ; MORGAN, C. R.** Crash test dummy lower leg. *Crash test dummy lower leg,* 1984
- **FASSE, W. G.** *Breast cancer detection training device,* 1975
- **GOLDSTEIN, M. K.** *Breast cancer detection model and method for using same,* 1959
- **GRAHAM, T. E. ; SABELMAN, E. E.** *Human skin model for intradermal injection demonstration or training,* 1983
- **GREENFIELD, C. L. ; JOHNSON, A. L.** *Anatomically correct artificial organ replicas for use as teaching aids,* 1993
- **HAFFNER, M. P. ; PIZER, R. S.** *Programmable anthropomorphic articulation,* 1977
- **HANDELMAN, D. A. ; LANE, S. H. ; GULLAPALLI, V.** *Limb coordination system for interactive computer animation of articulated characters,* 2001
- **HOLLAND, S. ; CHILDERS, B.** *Interactive multimedia eye surgery training apparatus and method,* 1995
- **JACOBUS, C. J. ; GRIFFIN, J. L.** *Method and system for simulating medical procedures including virtual reality and control method and system for use therein,* 1995
- **JOHNSON, B. S. ; GURR, R. H.** *Robotic human torso,* 1995
- **KOHNKE, O., B.** *Training manikin for practising external cardiac massage,* 1992
- **KORTGE, J. O.** *Knee joint for anthropomorphic dummy,* 1980
- **KRAMER, J. F.** *Force feedback and textures simulating interface device,* 1990
- **KRAMER, J. F.** *Force feedback and texture simulating interface device,* 1997
- **LEWIS, L. A. ; NUSBAUM, B. P. ; LEEDS, H. R.** *Simulated skin and method,* 1984
- **LINDSKOG, K. ; SANDEGARD, J.** *Device for teaching treatment of skeletal injuries,* 1989
- **MASON, J. T. ; CAWLEY, P. W. ; MASON, B. R.** *Method of determining stress effects in components of the human knee and anthropomorphic leg device therefor,* 1989
- **MERRIL, J. R. ; MILLMAN, A. S.** *Computer based medical procedure simulation system,* 1996
- **MESSMORE, F. B.** *Cardiac training mannikin,* 1986
- **MUKAI, N. ; HARADA, M. ; MUROI, K.** *Medical simulator system and medical simulator notifying apparatus,* 1999
- **OGDEN, A. M. ; MONROE, M. M. ; BARNETT, D. E.** *Apparatus for controlling an animated structure,* 1999

- **RAMSHAW, B. J. ; GARCHA, I. ; NAUM, R. ; FRANKLIN, K.** *Interactive medical training system,* 1998
- **ROSEN, B. A.** *Training device for setting broken limbs,* 1986
- **ROSENBERG, L. B. ; JACKSON, B. G.** *Electromechanical human-computer interface with force feedback,* 1996
- **SANDEGARD, J. D.** *Device for use when training the appropriate handling of a dislocated injury on a part of a body,* 1982

- **SMREKA, J. G.** *Breakable leg,* 1975
- **STROVER, S. M. ; STROVER, A. E.** *Surgical mode,* 1999
- **TAISUKE S.** *Limb driving apparatus,* 2000
- **TRIVETT, I. D.** *Artificial limb for training dummy,* 2000
- **VOIGHTS, D. L.** *Palpation and ascultation teaching method and apparatus,* 1982
- **WOLEY, P. F. ; WELANIN, M. J.** *Knee joint for anthropomorphic dummy,* 1981
- **YASUTARO, M.** *Robot device,* 1996